# FASCICULE DE BREVET EUROPEEN

(11) **EP 1 677 081 B1**
(45) Date de publication et mention de la délivrance du brevet: **25.03.2009**
(21) Numéro de dépôt: 04360115.2
(22) Date de dépôt: 30.12.2004
(51) Int. Cl.: G01D 5/26

(54) **Procédé de détermination de la position d'un premier élément en mouvement relativement à un second élément et dispositif pour mettre en oeuvre ledit procédé**
Verfahren zur Bestimmung der Stellung eines ersten Elements das sich relativ zu einem zweiten Element bewegt und Vorrichtung zur Durchführung des Verfahrens
Method of determining the position of a first element moving relatively to a second element and apparatus using the method.

(43) Date de publication de la demande: 05.07.2006
(73) Titulaire: Delphi Technologies Inc., Troy, MI 48007 (US); UNIVERSITE LOUIS PASTEUR, 67000 Strasbourg (FR)
(72) Inventeur: Marroux, Olivier, F-67400 Illkirch Graffenstaden (FR); Tupinier, Laurent, F-67116 Reichstett (FR); Ocard, Olivier c/o DELPHI MECHATRONIC SYSTEM, F-67411 Illkirch Graffenstaden (FR); Meyrueis, Patrick, F-67000 Strasbourg (FR); Kress, Bernard, F-67350 Neubourg (FR)
(74) Mandataire: Robert, Vincent

(56) Documents cités:
- WO-A1-20/06045312
- DE-A1- 2 817 172
- DE-A1- 4 243 779
- DE-A1- 19 621 188
- US-A- 5 844 814

## Description

La présente invention se rapporte au domaine technique général des systèmes ou dispositifs permettant de déterminer et de mesurer un mouvement relatif entre deux éléments, par exemple un déplacement entre une pièce mobile et une pièce fixe.

Dans un nombre croissant d'applications techniques, il est devenu important de pouvoir donner avec précision la position d'un élément mobile par rapport à un repère par exemple fixe, parfois à une fréquence élevée. Tel est le cas par exemple dans une colonne de direction de véhicule ou dans des machines-outils procédant à des usinages complexes, ou encore - à nouveau dans le domaine de l'automobile - pour des volets de systèmes de climatisation. Les applications possibles sont innombrables, et expliquent le développement exponentiel des capteurs de position, en particulier linéaires ou angulaires.

Plusieurs technologies sont utilisables pour la détection et la mesure de positions relatives, les capteurs qui en sont issus étant dans la plupart des cas associés à des moyens de traitement électroniques complexes utilisant des algorithmes d'interpolation qui permettent le calcul de la position.

On connaît ainsi déjà des dispositifs de repérage d'une position par rapport à un repère fixe basés sur des technologies optiques, qui nécessitent cependant dans presque toutes les hypothèses un traitement électronique complexe d'une information optique très basique. C'est par exemple le cas pour le dispositif divulgué dans le document DE 196 21 188, basé sur une structure holographique permettant de dévier un rayon lumineux, avec obtention d'un signal à traiter par des moyens algorithmiques. Il en va de même pour les dispositifs divulgués dans les documents DE 28 17 172 et US 5 844 814, basés sur des technologies dites à ombrage.

La présente invention concerne un procédé de détermination de la position de l'un parmi deux éléments en mouvement relatif l'un par rapport à l'autre, consistant à :
- diriger au moins un faisceau de lumière émis par une source de lumière liée à un élément vers un support diffractif lié au second élément, calculé et fabriqué pour générer un signal optique diffracté indicatif du positionnement dudit support, le signal optique étant produit par le support diffractif en transmission et/ou en réflexion ;
- détecter et lire au moins un code optique constitué par ledit signal, qui correspond à une unique position du support diffractif par rapport au faisceau ;
- attribuer une position à chaque code optique détecté.

Ce procédé se caractérise en ce que ledit code optique est composé de plusieurs bits constitués de structures optiques discrètes de type tache permettant une lecture binaire directe du code selon leur luminosité. Cette solution se distingue de celle divulguée par WO 2006/045312 qui utilise un composant diffractif pour altérer un rayon lumineux, utilisant un unique bit.

L'originalité de ce procédé, basé sur une modulation de phase et/ou d'amplitude du signal incident, réside dans le fait que le codage est réalisé par les moyens optiques, ce qui permet de simplifier notablement le traitement électronique. Il permet simplement de coder de manière absolue les positions relatives des éléments en mouvement.

Le codage optique diffractif présente en plus des avantages qui se traduisent également dans les dispositifs de mise en oeuvre du procédé, et qui seront évoqués plus en détail dans la suite du texte.

Selon un exemple de mise en oeuvre du procédé, le signal optique peut être défini par une manière du premier ordre de diffraction, les signaux complémentaires dans le même ordre de diffraction étant cependant conservés de manière à maintenir sensiblement constantes les intensités des taches lumineuses détectées. On évite ainsi des erreurs d'interprétation liées à une intensité non constante des taches à détecter et à analyser. L'uniformisation de l'énergie diffractée qui en résulte facilite la lecture de la position, qui est de ce fait plus fiable. Une partie du signal diffracté est lue, et le complémentaire dans le même ordre de diffraction n'est pas lu, mais utilisé pour contrebalancer le trop plein d'énergie pour uniformiser l'intensité.

Selon une variante, l'ordre conjugué correspondant au premier ordre de diffraction peut toutefois également être lu et comparé à ce dernier. Ceci permet d'effectuer une vérification du code optique obtenu par lecture du premier ordre de diffraction, puisqu'il y a une redondance entre les deux informations.

D'autres ordres de diffraction peuvent cependant être utilisés, pour préciser, compléter ou contrôler la lecture des signaux optiques.

De préférence, la position correspondant à la dernière détection est mémorisée. Ceci permet le cas échéant de détecter des mouvements anormaux, survenant par exemple lors d'une rupture ou d'une détérioration d'une pièce mécanique participant au mouvement ou à la détermination de la position.

Le code optique constitué par chaque signal optique se présente en l'espèce sous la forme de structures optiques sur la base desquelles sont générés, à l'aide de moyens de détection et de lecture desdites structures, les bits 0 et 1 d'un code électronique. Un tel signal optique est extrêmement intéressant car il est insensible aux vibrations, décalages (il est par exemple invariant en translation avec un support diffractif de Fourier).

Selon une variante dans laquelle les codes ne sont pas distingués par secteurs selon les positions de l'élément mobile, mais évoluent plutôt continûment, chaque signal détecté et lu est soumis à un algorithme de calcul de la position du support diffractif par rapport au faisceau. Les algorithmes varient évidemment selon la vitesse de déplacement relatif.

Dans le procédé de l'invention, selon une autre variante, chaque code optique détecté et lu est comparé à des codes électroniques stockés dans une table mémoire et qui permettent de déterminer de manière biunivoque la position du support diffractif. Chaque code correspond en fait à une unique position. Il est alors nécessaire de l'identifier, c'est-à-dire en pratique de délimiter chaque code.

Dans ce but, le code optique diffracté peut comporter au moins une structure optique de départ et au moins une structure optique de fin délimitant la zone de lecture du signal optique correspondant à une position déterminée du support diffractif par rapport au faisceau.

Selon une possibilité additionnelle, chaque code optique correspondant à une position du support diffractif peut comporter au moins une structure optique de synchronisation dont la détection permet d'enclencher la phase de lecture du signal optique intégrant le code d'une position du support diffractif par rapport au faisceau. Cette phase est alors effectuée uniquement lorsque la délimitation du code est attestée par le signal optique de synchronisation.

Pour les variantes précitées, chaque code optique correspondant à une position identifiable peut enfin comporter au moins une structure optique de calibration utilisée à des fins de diagnostic du bon fonctionnement de la lecture.

Lesdites structures optiques sont en fait constituées d'au moins une tache lumineuse dont l'intensité peut être mesurée. En cas de problème de fonctionnement des composants du système, ou d'apparition de conditions (buée,...) rendant le fonctionnement incertain, l'analyse de ces structures optiques et du signal qu'elles constituent permet au système de conclure à la possibilité ou non d'une lecture adéquate.

Il est à noter que les taches lumineuses constituant les structures optiques peuvent prendre diverses formes plus ou moins complexes.

Selon une possibilité, les codes définissant la position d'un élément par rapport à l'autre obéissent, dans l'ordre de leur succession, au code GRAY. La modification d'une seule tache lumineuse à un emplacement connu permet dès lors de simplifier considérablement l'analyse du positionnement.

Les variations d'intensité d'au moins une des structures optiques formant les signaux optiques peuvent en outre être codées à l'aide d'un convertisseur analogique-numérique, autorisant une lecture binaire ou en niveaux de gris qui permet encore d'affiner la résolution de la mesure.

Dans le cas d'un codage sectorisé, qui correspond à la première variante précitée, la source de lumière peut être pulsée selon une fréquence asservie à la vitesse de l'élément en mouvement, la lecture étant alors synchronisée à la génération du ou des faisceaux de lumière. Cela permet le cas échéant de s'affranchir de l'utilisation d'un signal optique de synchronisation.

Le procédé dont il est fait état ci-dessus peut s'appliquer à tout type de mouvement relatif, et notamment à la rotation relative de deux éléments. Dans cette hypothèse, il consiste à déterminer la position angulaire de l'un des éléments par rapport à l'autre.

La précision de la mesure dépend de considérations dimensionnelles, fabricationnelles et évidemment aussi de la définition voulue pour le signal ; selon une possibilité, le nombre de taches ou structures optiques utilisées pour le codage de la position angulaire est au moins égal à 12 pour permettre une résolution inférieure à 0,1° d'angle et une précision du même ordre de grandeur. Les 4 096 possibilités offertes par 12 bits permettent en effet une résolution de cet ordre.

Le but de la présente invention est également atteint à l'aide d'un support diffractif pour un dispositif de mesure de la position d'un premier élément en mouvement relatif par rapport à un second élément, et comportant un moyen de montage sur ledit premier élément et des zones diffractives présentant des moyens aptes à diffracter, par réflexion et/ou par transmission un faisceau de lumière émis par au moins une source lumineuse fixe par rapport au second élément. Ce support se caractérise en ce qu'il comporte au moins une piste diffractive continue ou non adaptée à générer lorsqu'elle est éclairée par un faisceau lumineux des codes optiques composés de plusieurs bits constitués de structures optiques discrètes de type tache définissant selon leur luminosité des positions uniques du support.

La diffraction des rayons lumineux peut être obtenue par différentes voies.

Ainsi, la piste diffractive peut présenter par exemple un relief gravé dans la matière constitutive du support diffractif, apte à diffracter le ou les faisceaux incidents et à générer un signal optique dont la lecture permet l'identification de la position du premier élément par rapport au second élément, par identification du code constitué par le signal.

Selon un second exemple de réalisation, la piste diffractive peut être obtenue par modulation de la transparence du support, par exemple en appliquant une matière opaque à certains endroits sur un support transparent, en vue du même résultat.

La piste diffractive peut aussi être obtenue par modulation de l'indice de réfraction ou encore par une combinaison des solutions évoquées.

La modulation par exemple des reliefs ou de la matière opaque, dont la géométrie et la distribution sont calculées par ordinateur, génère un signal optique diffracté particulier sous l'action d'au moins un faisceau de lumière, ledit signal constituant un code optique constitué de structures optiques définissant une position unique du support à tout instant.

Le support diffractif peut ainsi être réalisé avec des matériaux connus, avec une grande reproductibilité et sans altérer la précision et/ou la résolution de la détermination de chaque position. Une grande importance est apportée au choix de ces matériaux, qui doivent de préférence être peu onéreux et aisés à travailler. Il peut par exemple s'agir de polycarbonate, de PMMA, et plus généralement de tous matériaux optiquement adéquats.

Selon un exemple de réalisation correspondant à l'une des variantes précitées, chaque piste est divisée en zones à structure diffractive individualisée générant un code correspondant à une position unique du support, chaque zone comportant une pluralité de formes élémentaires d'allure parallélogrammique disposées sous forme de grille périodique ou apériodique.

Dans une configuration rotative, le support diffractif peut par exemple comporter :
- un disque rigide ;
- un moyen de montage à un arbre rotatif ;
- au moins une piste diffractive de forme annulaire.

A titre d'exemple, le disque peut comporter trois pistes diffractives, la première servant à définir le code optique, la seconde servant à définir un signal de synchronisation et la troisième servant à définir un signal de calibration.

Dans l'hypothèse de la première variante à domaines sectorisés évoquée ci-dessus, chaque piste est alors divisée en des secteurs angulaires équisurfaciques délimitant lesdites structures diffractives individualisées.

Selon un exemple de réalisation respectant des exigences d'encombrement réduit, les secteurs angulaires peuvent présenter des dimensions de l'ordre de 10 µm à 100 µm. Les dimensions du disque sont alors prévues pour que chaque piste comprenne au moins 3 600 secteurs angulaires, de manière à satisfaire à l'exigence d'une résolution inférieure à 0,1°.

En satisfaisant à ces hypothèses, il est possible de construire un support dont le rayon n'excède pas quelques dizaines de millimètres.

Le disque n'est pas nécessairement plat et peut comporter, à sa périphérie, une portion tronconique dont une des surfaces inclinées comporte au moins une piste diffractive. Une telle surface inclinée permet par exemple d'optimiser le positionnement et/ou l'orientation de la source de lumière et des moyens de détection.

Selon un autre exemple de réalisation, très souple d'emploi, la piste diffractive peut être disposée sur une surface cylindrique, par exemple l'arbre de rotation d'une colonne de direction. Il peut alors être envisagé d'y coller une piste diffractive dont le support est souple.

Le but de la présente invention est également atteint à l'aide d'un dispositif de mesure de la position d'un premier élément en mouvement relatif par rapport à un second élément et comportant :
- au moins une source de lumière fixe, émettant au moins un faisceau lumineux sur au moins un support diffractif mobile ;
- des moyens de détection et de lecture d'un signal optique obtenu par diffraction du ou des faisceaux lumineux par transmission ou réflexion à partir du ou des supports diffractifs ;
- et des moyens de traitement du code optique résultant du signal détecté permettant de déterminer la position du ou des supports diffractifs par rapport au(x) faisceau(x).

Ce dispositif se caractérise en ce que le code optique est composé de plusieurs bits constitués de structures optiques discrètes de type tache définissant une unique position du premier élément par rapport au second élément, les moyens de traitement permettant une détection au moins binaire des structures formant le code selon leur luminosité.

De préférence, ce dispositif de mesure de la position comporte des moyens de mémoriser la position obtenue, afin de l'utiliser par exemple dans le traitement ultérieur de l'information.

Sans que cela soit une nécessité, le faisceau incident est de préférence obtenu à partir d'une source de lumière cohérente, par exemple une diode laser.

Le circuit lumineux utilisé peut obéir à de multiples configurations selon l'application et des contraintes par exemple structurelles ou d'encombrement.

Le ou les faisceaux lumineux peuvent ainsi être envoyés vers le ou les supports diffractifs via au moins un élément optique de relais du type miroir, lentille, prisme, élément diffractif, élément réflectif, élément réfractif et/ou via au moins un élément optique de guidage du type fibre optique ou guide d'onde, le but étant d'optimiser le positionnement et l'encombrement de l'ensemble des composants constitutifs du dispositif de mesure. Des composants optiques tels que mentionnés peuvent également être utilisés en sortie du ou des supports diffractifs.

Le ou lesdits faisceaux lumineux peuvent selon le cas également passer par au moins un organe exerçant une fonction de collimation, de focalisation ou d'astigmatisme. On peut ainsi adapter les dimensions de chaque faisceau lumineux à la taille des structures diffractives individualisées.

Dans certaines hypothèses encore, le ou les faisceaux lumineux pourront être envoyés vers le ou les supports diffractifs via au moins un diaphragme de conformation. On évite ainsi d'illuminer les structures diffractives adjacentes qui peuvent générer des codes erronés ou des interférences parasites.

Selon une possibilité, les moyens de détection et de lecture des codes optiques diffractés peuvent consister en des photodétecteurs du type barrettes réseaux ou matrices de pixels, capteurs CCD, photodiodes, ou encore cellules photoélectriques ou photovoltaïques, disposés sur la trajectoire des rayons diffractés par le ou les supports diffractifs. Le nombre et la disposition des pixels ou capteurs sont définis, selon l'application, en fonction de la précision et/ou de la rapidité que doit atteindre le traitement de l'information.

Selon une configuration possible, les photodétecteurs peuvent être disposés de telle sorte que chaque tache ou structure optique obtenue à l'endroit où un rayon diffracté rencontre un réseau de pixels, couvre au moins 3 pixels. Cela permet de mieux détecter les signaux optiques obtenus. Une détection à l'aide d'une seule cellule permettrait à l'inverse de gagner en rapidité de traitement.

De même, le nombre de pixels entre deux taches adjacentes est fixé à au moins trois pixels. En pratique, l'organe de détection est un composant photodétecteur existant sur le marché.

Dans certaines configurations, le ou les faisceaux lumineux sont dirigés selon une incidence normale au support diffractif, quitte à ce que cette caractéristique implique un circuit optique plus lourd, c'est à dire comprenant plus de composants tels que des éléments optiques relais pour diriger le ou les faisceaux.

A l'inverse, si le faisceau lumineux est incliné en direction du support diffractif, de préférence d'un angle compris entre 0° et 45° par rapport à la normale, le circuit emprunté par le ou les faisceaux pourront être simplifiés puisque ce dernier est plus directement orienté vers le support.

Le dispositif peut en outre comporter des moyens de synchronisation permettant de détecter et lire un code optique généré par une structure diffractive individualisée uniquement lorsque le rayon émis par la source lumineuse est par exemple centré sur ladite structure.

Selon un exemple de réalisation, des moyens de synchronisation peuvent comporter des photodétecteurs spécifiques dédiés à la détection de structures optiques obtenues indépendamment de celles constituant le code de la position à mesurer, par exemples des taches lumineuses disposées sur au moins une piste diffractive spécifiquement dévolue à la synchronisation.

Une application dans laquelle les différents volets de l'invention envisagés jusqu'ici sont particulièrement intéressants est la mesure du mouvement rotatif d'au moins un support diffractif solidaire d'un arbre rotatif.

Dans ce cas, pour réaliser un capteur d'angle absolu sur plusieurs tours, il est même possible d'associer deux disques rotatifs diffractifs superposés, l'un comportant la mesure des positions angulaires sur un tour et l'autre, tournant N fois moins vite, permettant la mesure du nombre de tours accomplis dans la limite de N tours.

A titre d'exemple, l'invention dans son ensemble pourra parfaitement s'appliquer à une colonne de direction d'un véhicule.

D'autres caractéristiques et avantages ressortiront également de la description détaillée figurant ci-après, en référence aux dessins annexés, non limitatifs, selon lesquels :
- la figure 1 est un organigramme d'un exemple de mise en oeuvre du procédé conforme à l'invention ;
- la figure 2 est un organigramme d'un exemple de mise en oeuvre d'un procédé de calcul conforme à l'invention ;
- les figures 3a et 3b sont des exemples de réalisation d'un support diffractif conforme à l'invention ;
- les figures 4a et 5a sont des exemples de réalisation de détails de pistes diffractives d'un support diffractif conforme à l'invention;
- les figures 4b et 5b représentent des signaux optiques codés diffractés respectivement par des détails des pistes diffractives des figures 4a et 5a ;
- les figures 6 à 9 illustrent des exemples de signaux optiques codés et de leur traitement lors d'une rotation du support diffractif ;
- la figure 10 représente un exemple de réalisation d'un dispositif de mesure conforme à l'invention ;
- la figure 11 a représente une première variante de réalisation du dispositif de mesure de la figure 10 ;
- la figure 11b représente une seconde variante de réalisation du dispositif de la figure 10 ;
- la figure 12 représente un autre exemple de réalisation du dispositif de mesure conforme à l'invention ;
- la figure 13 représente un autre exemple de réalisation d'un dispositif de mesure conforme à l'invention ;
- la figure 14 représente un autre exemple de réalisation du dispositif de mesure conforme à l'invention ;
- la figure 15 représente un autre exemple de réalisation d'un dispositif de mesure conforme à l'invention ;
- la figure 16 représente un autre exemple de réalisation d'un dispositif de mesure conforme à l'invention ;
- la figure 17 représente un autre exemple de réalisation d'un support diffractif conforme à l'invention ;
- la figure 18 est une représentation schématique d'un exemple de réalisation d'un dispositif de mesure conforme à l'invention ;
- la figure 19 représente schématiquement des détails du dispositif de mesure et du support diffractif conformes à l'invention ;
- la figure 20 est une représentation d'un exemple de signal optique diffracté, obtenu selon le procédé conforme à l'invention ;
- la figure 21 représente un détail agrandi de la figure 20.

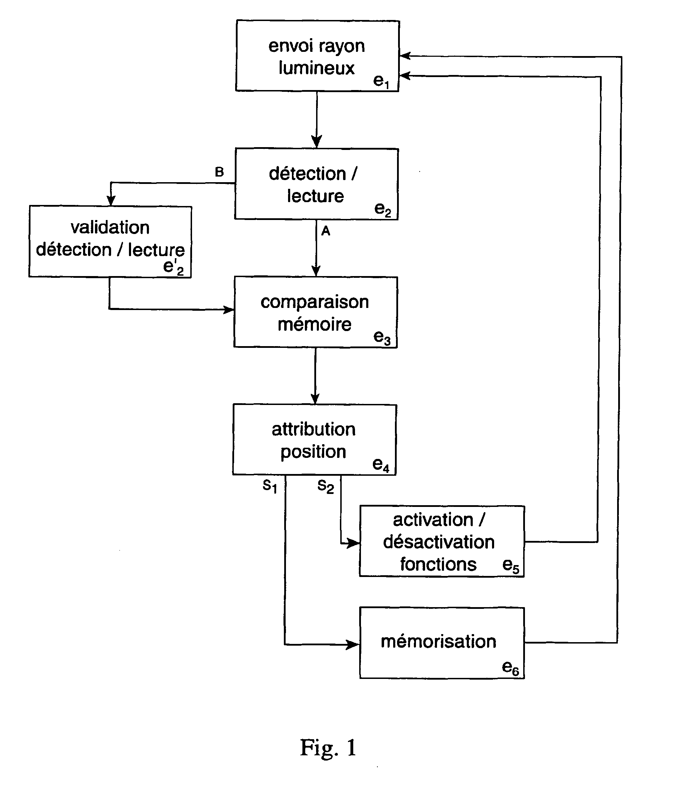

La présente invention concerne un procédé de détermination de la position de l'un parmi deux éléments en mouvement relatif l'un par rapport à l'autre. Le procédé utilise des moyens optiques. Un exemple d'organigramme fonctionnel est par exemple schématisé à la figure 1.

Le procédé conforme à l'invention consiste selon l'étape (e₁), à diriger au moins un rayon de lumière émis par une source de lumière sur un support diffractif (1) prévu pour générer un signal optique. Ce dernier est indicatif du positionnement du support par rapport à un repère fixe. Le signal optique est produit par le support diffractif (4) par transmission et/ou par réflexion.

Selon une étape suivante (e₂), le procédé consiste à détecter et lire au moins un code optique constitutif du signal. Ce signal diffracté correspond à une position unique du support diffractif (1). Le code optique est ensuite, selon l'étape (e₃), comparé via une table de mémoire à des données préenregistrées correspondant à des positions. Le procédé permet ainsi, selon l'étape (e₄), d'attribuer une position à chaque code optique détecté.

L'attribution d'une position précise du support diffractif et par conséquent d'autres éléments solidaires dudit support, permet d'activer et/ou de désactiver diverses fonctions ou fonctionnalités. Ces dernières interviennent par exemple dans la gestion et le contrôle du fonctionnement d'un véhicule.

Selon une variante de mise en oeuvre du procédé conforme à l'invention, on peut, au préalable de l'étape de comparaison (e₃) avec une table de mémoire, procéder à une étape de validation (e'₂) de la détection et de la lecture. Ceci permet notamment de vérifier si la détection et la lecture ont été effectuées dans de bonnes conditions ne mettant pas en cause la précision du résultat de lecture.

Selon une variante d'exécution du procédé, l'attribution d'une position au support diffractif (1) permet d'activer ou de désactiver des fonctions ou fonctionnalités à des fins d'information. Il s'agit ici par exemple de fonctions indicatives donnant un retour d'information à l'utilisateur.

Selon encore un autre mode d'exécution du procédé, l'attribution de la position peut tout simplement aboutir, selon l'étape (e₆), à une mémorisation de la nouvelle position ainsi détectée et lue. Le cycle de détermination de la position peut reprendre selon une fréquence préétablie.

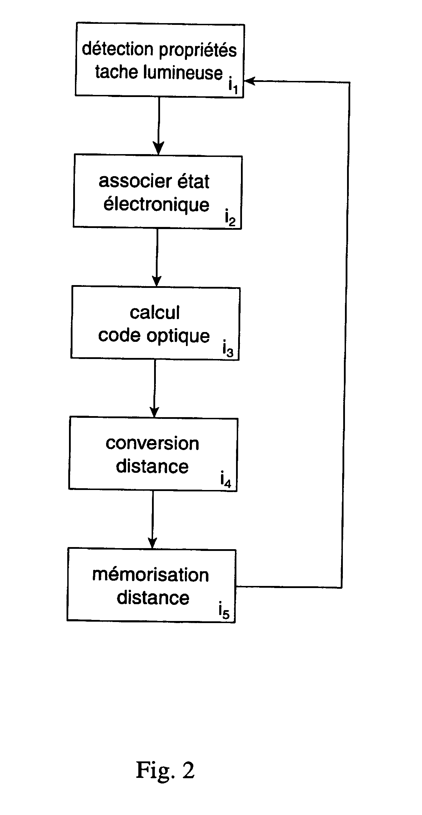

La présente invention concerne également un algorithme de calcul dont un organigramme est par exemple schématisé à titre d'exemple à la figure 2. Cet algorithme comprend une série d'instructions I1, I2, I3, I4, I5 servant à mettre en oeuvre le procédé de détermination conforme à l'invention. La première instruction I1 vise à détecter les propriétés des taches lumineuses ou structures optiques diffractées. Selon une seconde instruction I2, l'algorithme permet d'associer un état électronique à chaque code optique diffracté. Selon une instruction suivante I3 le code optique diffracté lu par les détecteurs est ensuite traité par des moyens de calcul, de manière à pouvoir le convertir en une distance ou un écart angulaire selon une instruction I4. Selon une autre instruction I5, cette distance ou cet écart angulaire est mémorisé.

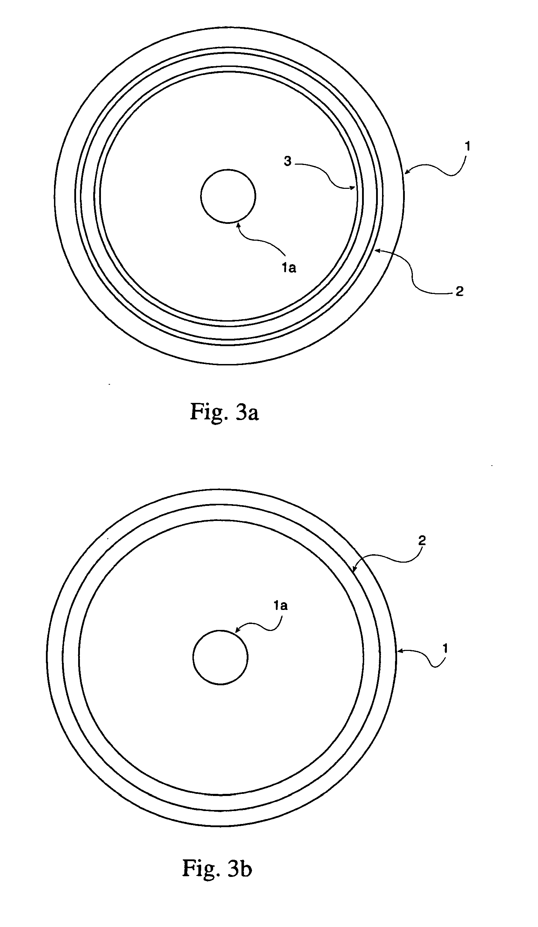

Un exemple de support diffractif (1) conforme à l'invention est par exemple représenté à la figure 3a ou à la figure 3b. Ledit support diffractif comporte un moyen de montage sur un premier élément en mouvement relatif par rapport à un second élément, ainsi qu'au moins une piste diffractive (2, 3) continue ou non. Les pistes diffractives (2) ou (3) présentent des moyens diffractants par réflexion et/ou par transmission de la lumière émise par au moins une source lumineuse fixe par rapport au second élément.

Le support diffractif (1) comporte par exemple un disque rigide et un moyen de montage (1a) à un arbre rotatif ainsi qu'au moins une piste diffractive (2) ou (3) de forme annulaire s'étendant sur 360°. Les pistes diffractives (2) ou (3) présentent par exemple un relief gravé dans la matière constitutive dudit support (1), dont la lecture permet l'identification de la position du premier élément (à savoir le support diffractif) par rapport à un second élément (repère fixe). Le support diffractif (1) est constitué d'un matériau synthétique du type polycarbonate, PMMA (polyméthylméthacrylate) ou tout autre matériau organique présentant des propriétés optiques adéquates.

Les pistes diffractives (2) ou (3) peuvent également être obtenues par une matière opaque rapportée à certains endroits sur un support transparent. On lit ensuite l'intensité lumineuse du front d'onde diffracté par le support diffractif et focalisé sur les moyens de détection. La lecture permet l'identification de la position du premier élément par rapport au second élément. Le relief ou la matière opaque dont la forme et la distribution sont calculées par ordinateur génère un signal optique diffracté particulier sous l'action d'une source de lumière, ledit signal constituant un code optique définissant une position particulière du support. Chaque piste (2, 3) est divisée en zones de structure diffractive individualisée (4, 5) représentées par exemple aux figures (4a) et (5a) et générant un code correspondant à une unique position du support (1).

Les pistes diffractives (2, 3) peuvent également être réalisées avec une modulation de transparence ou d'indice de réfraction.

La figure 3b montre un exemple de réalisation dans lequel le disque rigide ne comporte qu'une seule piste diffractive (2). Cette dernière peut cependant être constituée de plusieurs secteurs annulaires diffractifs adjacents.

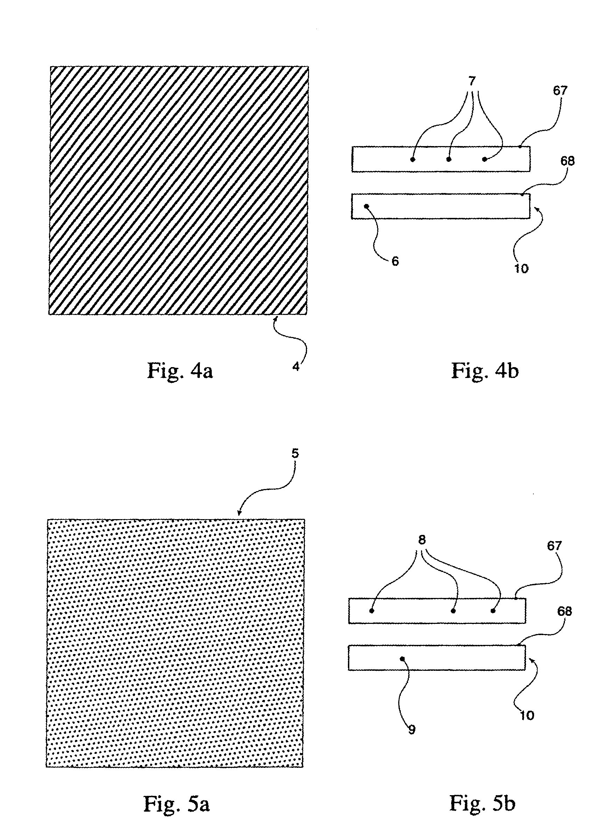

Un exemple de chaque code obtenu est par exemple matérialisé aux figures (4b) et (5b). Chaque zone de structure diffractive individualisée comporte par exemple une pluralité de formes élémentaires disposées sous forme d'une grille de ces formes, par exemple en 128 x 128 ou en 128 x 256. Le signal optique constituant le code optique définissant une position particulière du support par rapport au faisceau, et dont des exemples sont représentés aux figures (4b) et (5b) est par exemple constitué de taches lumineuses diffractives (6, 7, 8, 9), à savoir en l'espèce des taches lumineuses du premier ordre de diffraction et, le cas échéant, de son conjugué (non représenté). Les ordres de diffraction suivants ne sont pas exploités, mais conservés dans le signal optique diffracté. Un exemple de premier ordre de diffraction est repéré par la référence 10 sur les figures 4b et 5b. Sans sortir du cadre de la présente invention, il est également envisageable d'utiliser le second ordre de diffraction et, le cas échéant, son ordre conjugué.

A titre d'exemple, chaque piste diffractive (2) ou (3) est divisée en des secteurs angulaires équisurfaciques constituant les structures diffractives individualisées. Les secteurs angulaires présentent par exemple des dimensions de l'ordre de 10 µm à 100 µm. Chaque piste diffractive (2) ou (3) comprend de préférence au moins 3 600 secteurs angulaires de manière à obtenir une précision inférieure à 0,1° dans la détermination de la position du support.

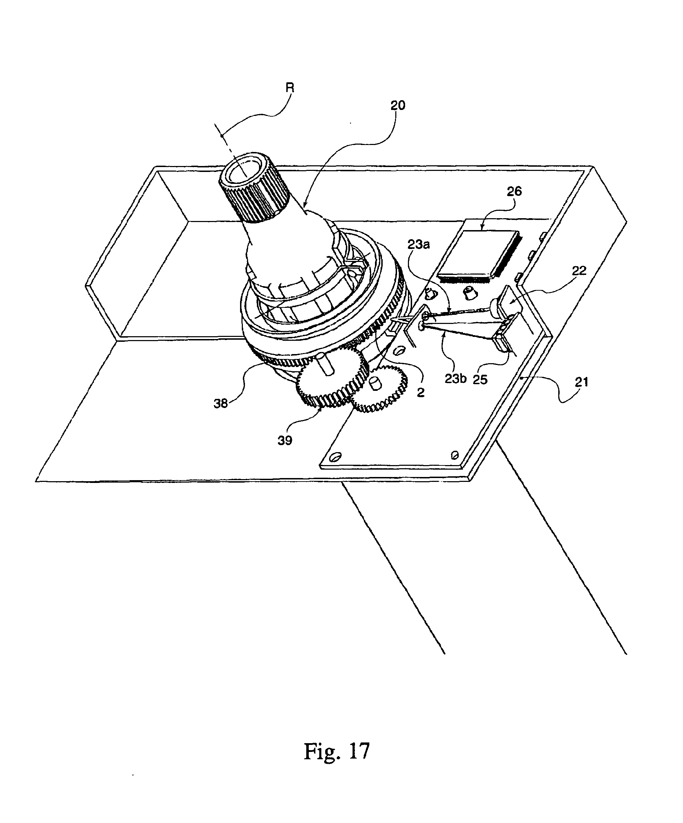

Selon un exemple de réalisation, représenté par exemple à la figure 17, la piste diffractive (2, 3) est disposée sur un support autocollant. Ce dernier peut ensuite être rapporté, et plus particulièrement collé, sur tout support et notamment sur un support d'allure cylindrique du type arbre d'une colonne de direction. Les dimensions du support diffractif (1) peuvent ainsi être adaptées à un emplacement et à une forme particulière. On obtient un encombrement réduit et une grande souplesse d'utilisation pour le support diffractif (1).

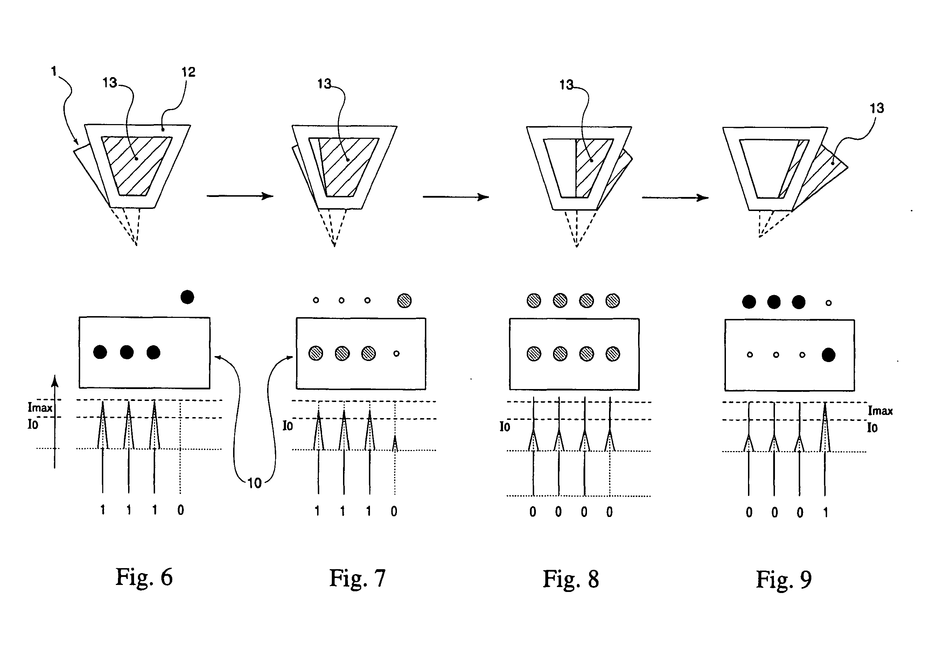

Aux figures 6 à 9, on a schématisé quatre positions successives d'un support diffractant par rapport à un repère fixe. Ce repère fixe est matérialisé par un diaphragme et/ou organe de collimation (12) fixe associé à la source lumineuse. Le support diffractif (1) comporte des structures diffractives individualisées (13) et le déplacement est matérialisé derrière l'organe (12) aux figures 6 à 9. Le procédé conforme à l'invention permet, comme cela est représenté à la figure 6, de lire un code diffracté (10) variant en fonction de la position de la structure diffractive individualisée (13) et par conséquent du support diffractif (1) par rapport à l'organe de collimation. Le code diffracté (1), qui correspond au premier ordre de diffraction, présente donc une évolution transcrite par l'intermédiaire de moyens de détection à niveau de seuil, lesquels mesurent par exemple des variations d'intensité lumineuse. On obtient ainsi à la figure 6 trois taches lumineuses atteignant un niveau d'intensité maximale Imax ainsi qu'une tache dépourvue de lumière. Par l'intermédiaire de moyens de transformation du type convertisseur analogique-numérique on obtient ainsi un code sous la forme 1 1 1 0. Lorsque le support diffractif (1) continue à tourner autour de son axe de rotation, une déviation angulaire de la structure de diffraction individualisée (13) se traduit par une autre répartition lumineuse sur les taches de diffraction. On obtient ainsi trois taches lumineuses d'intensité lumineuse réduite mais d'un niveau supérieur au niveau minimal de détection lo. La quatrième tache passe ensuite d'une tache dépourvue de lumière à une intensité faible inférieure au niveau minimal lo. Le code optique numérique ainsi obtenu reste donc inchangé. En revanche, une poursuite de la rotation de la structure diffractive individualisée (13) se traduit par une répartition de l'intensité lumineuse dans le premier ordre de diffraction de manière à ne détecter aucune desdites taches lumineuses. L'intensité détectée est en effet inférieure au niveau minimal Io. On obtient ainsi le code optique traduit sous forme 0 0 0 0. Lorsqu'enfin la structure individualisée (13) est sur le point de sortir de la fenêtre de collimation (12) on obtient une quatrième tache lumineuse dépassant le seuil de détection minimum Io, ainsi que trois taches lumineuses plus faibles inférieures au niveau minimum lo et se traduisant par conséquent par un code optique sous forme 0 0 0 1. Les niveaux 0 sont bien évidents et matérialisés par des pointillés sur les figures 6 à 9 et les niveaux 1 sont matérialisés par les traits gras. A chaque position du support diffractif (1), et par conséquent de la structure diffractive individualisée (13), on obtient ainsi un code optique unique selon un degré de résolution déterminé par le système.

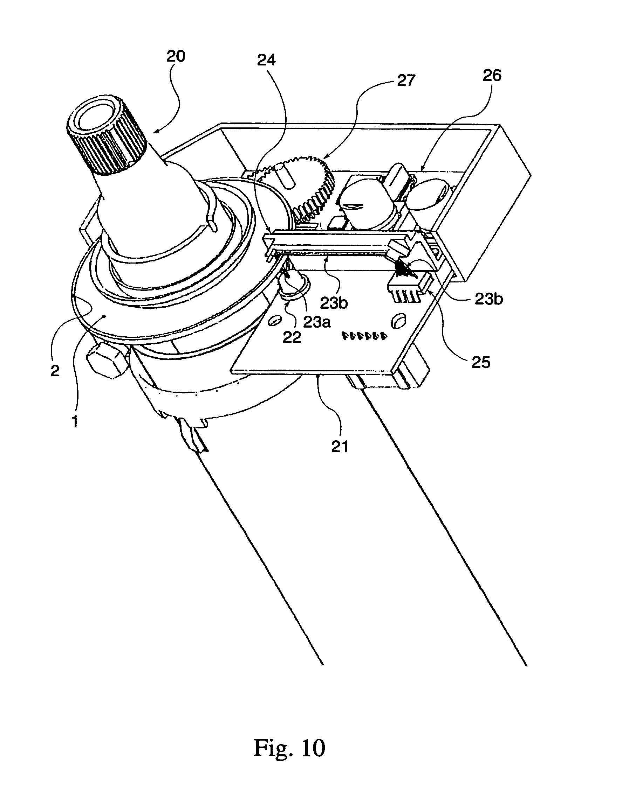

La présente invention concerne également un dispositif de mesure de la position d'un premier élément en mouvement relatif par rapport à un second élément. Un tel dispositif de mesure, et plus précisément différentes variantes de réalisation de ce dispositif sont par exemple représentés aux figures 10 à 17.

Dans l'exemple de réalisation représenté à la figure 10, on montre une colonne de direction (20) sur laquelle est rapporté le support diffractif (1). Ce dernier présente par exemple à sa périphérie une piste diffractive (2) de forme annulaire. Le support diffractif (1) est solidarisé à un arbre rotatif par tout moyen connu. Le dispositif de mesure conforme à l'invention est disposé de façon adjacente au support diffractif (1) sur un support fixe (21). Le dispositif de mesure comporte une source de lumière (22) émettant un faisceau incident (23a) traversant la piste diffractive (2). L'exemple de réalisation représenté travaille ainsi par transmission sur le support diffractif (1). Le faisceau incident (23a) est diffracté en (23b) par la piste diffractive (2). Ce faisceau diffracté (23b) est ensuite guidé via un ensemble (24) incluant par exemple un guide d'onde et des miroirs vers des moyens de détection (25). Ces derniers sont pilotés par des moyens électroniques adéquats, lesquels permettent d'analyser les différents codes optiques diffractés par le support diffractif (1) lors de sa rotation.

Un jeu d'engrenages (27) est également prévu pour entraîner un support diffractif complémentaire, à une vitesse de rotation différente, permettant ainsi de compter le nombre de tours et de coder la position absolue sur l'ensemble du débattement volant soit en règle générale plus ou moins 4 ou 5 tours.

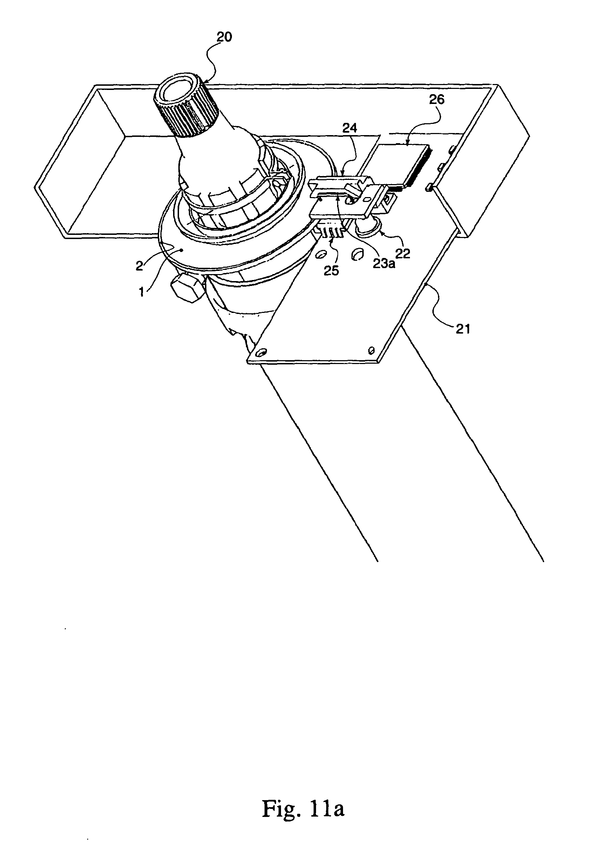

Dans l'exemple de réalisation représenté à la figure 11a, les moyens de détection et de lecture (25) sont disposés au moins en partie directement sous une zone périphérique du support diffractif (1). La source lumineuse (22) émet un faisceau incident (23a) lequel est dirigé notamment via un jeu de miroirs (24) sur la surface supérieure de la piste diffractive (2). Le signal optique codé diffracté est ensuite lu par transmission sous le support diffractif (1). Cet exemple de réalisation permet de réduire substantiellement l'encombrement du dispositif conforme à l'invention.

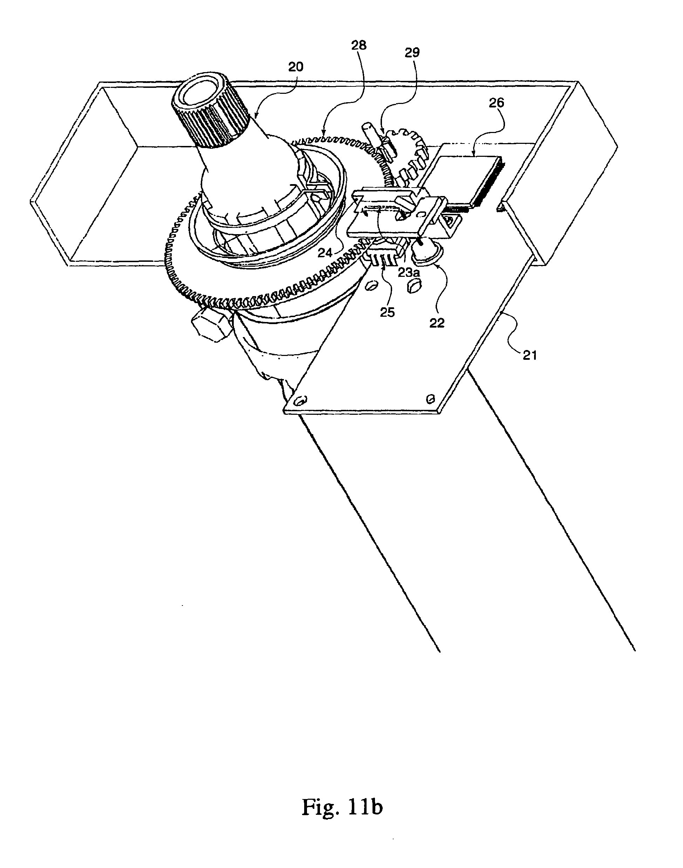

Dans l'exemple de réalisation représenté à la figure 11b, le support diffractif (1) est associé à une roue dentée (28), laquelle entraîne un jeu d'engrenages (29) complémentaire.

Un jeu d'engrenages (29) est également prévu dont la fonction est identique à celle du jeu d'engrenages (27).

A titre d'exemple, la piste diffractive peut être rapportée directement sur la roue dentée (28), laquelle constitue ainsi le support diffractif.

Selon un autre exemple de réalisation, la roue dentée (28) est réalisée dans un matériau transparent pour le faisceau incident (23a).

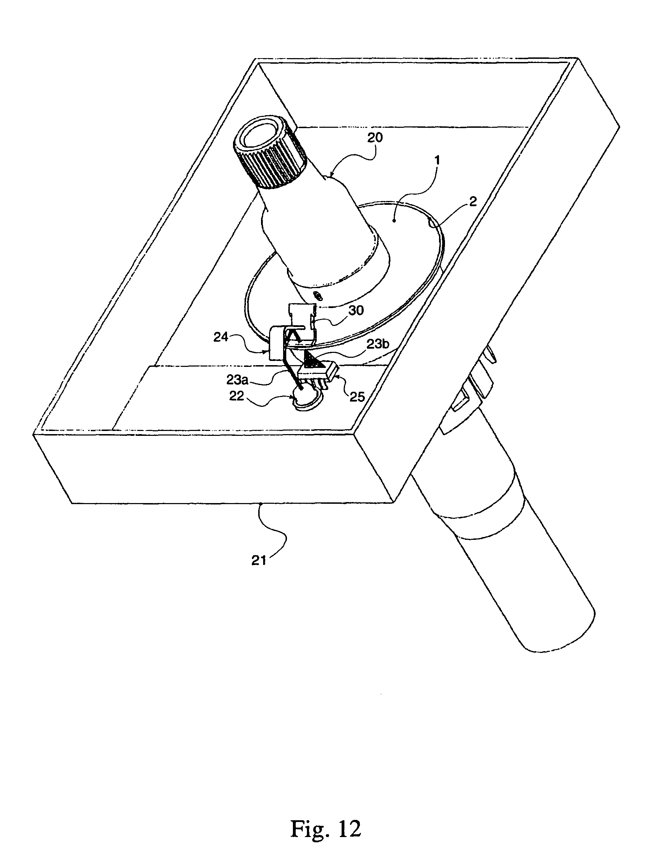

Selon un autre exemple de réalisation représenté par exemple à la figure 12, le dispositif de mesure comprend un organe optique (30) permettant par exemple de réaliser un diaphragme pour conformer le faisceau optique incident (23a).

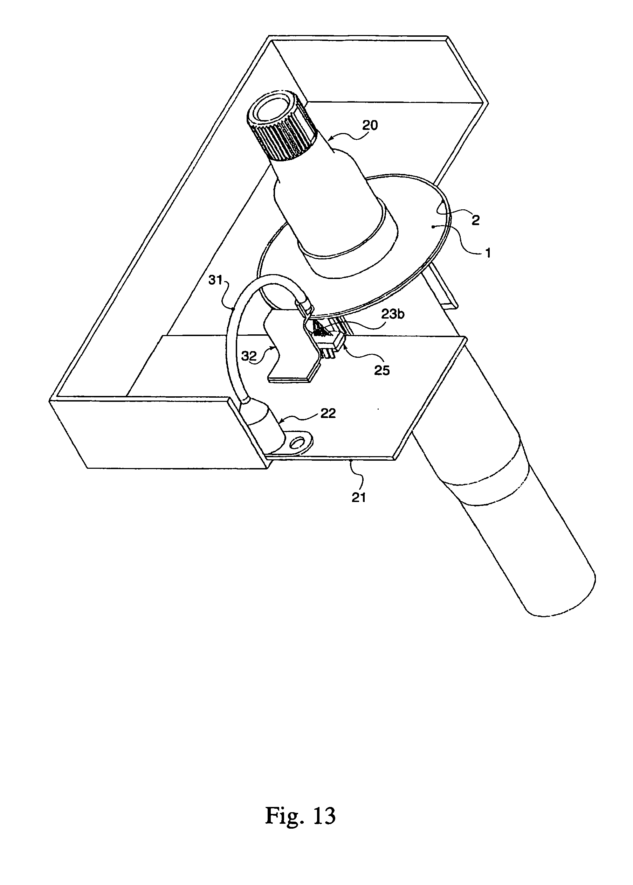

Selon un autre exemple de réalisation représenté à la figure 13, la source de lumière fixe (22) est associée à un guide de lumière (31) envoyant le rayon lumineux sur la piste diffractive (2). Le faisceau diffracté (23b) est ensuite lu par les moyens de détection (25) par transmission. Le guide de lumière (31) est par exemple réalisé à l'aide de fibres optiques. La variabilité du positionnement de la source de lumière (22) peut ainsi être améliorée de façon substantielle sans nuire aux performances et aux autres avantages du dispositif de mesure conforme à l'invention, ce qui confère à l'ensemble une plus grande souplesse.

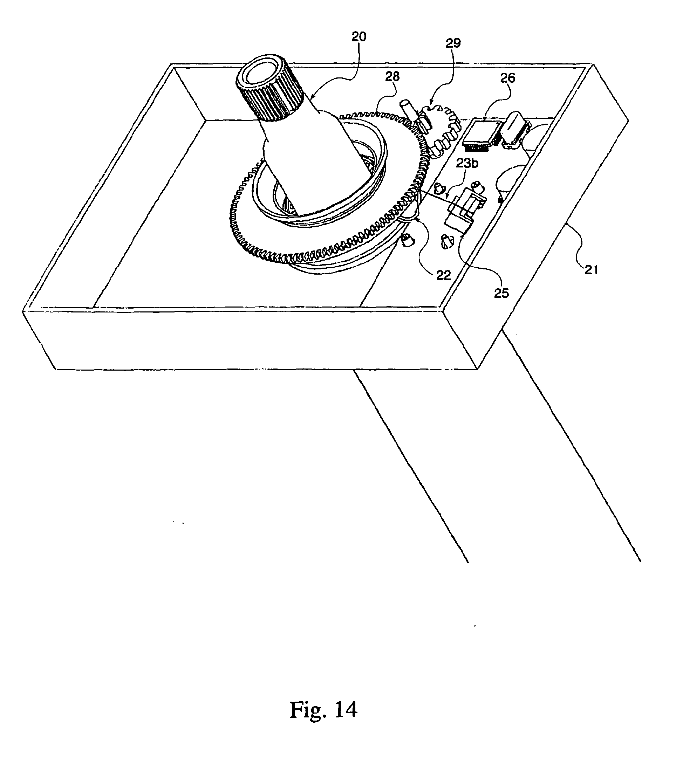

Dans l'exemple de réalisation représenté à la figure 14 le support diffractif (1) est disposé sous la roue dentée (28). La source de lumière fixe (22) est également disposée sous le support diffractif (1) et émet un faisceau incident incliné par rapport à la normale de manière à obtenir un faisceau diffracté dirigé vers les moyens de lecture (25). Le choix de l'angle d'incidence ainsi que l'utilisation d'un support diffractif par réflexion permet d'optimiser le positionnement et l'orientation de la source lumineuse fixe (22) d'une part et des moyens de détection de lecture (25) d'autre part.

Selon un autre exemple de réalisation non représenté aux figures, il est également possible de prévoir une piste diffractive (2) disposée sur un tronçon annulaire s'étendant par exemple de façon tronconique par rapport à l'axe de rotation. La diffraction par réflexion sur ce tronçon tronconique comportant la piste diffractive (2) permet également d'optimiser le positionnement de la source lumineuse (22) d'une part et des moyens de détection (25) d'autre part.

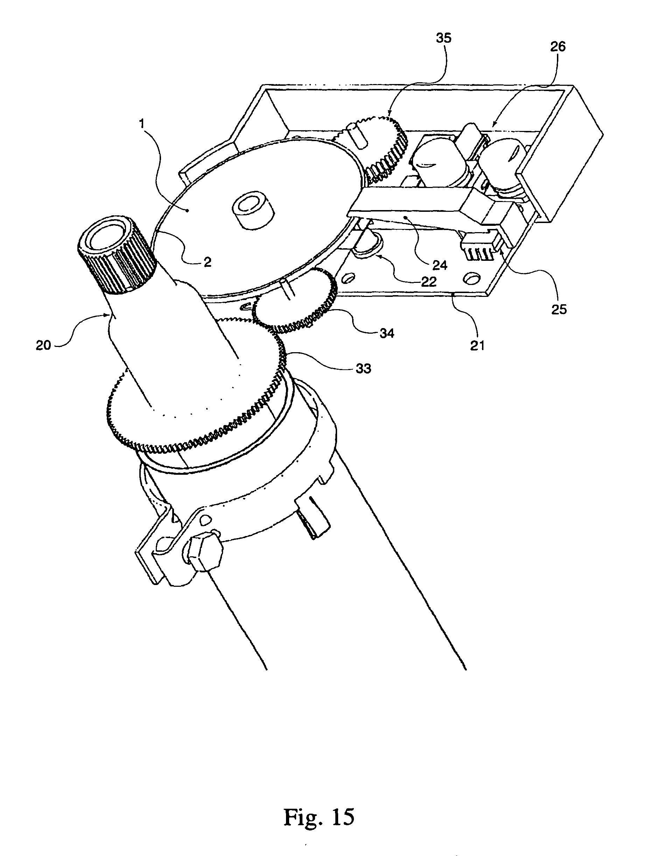

Selon un autre exemple de réalisation conforme à l'invention et représenté à la figure 15, la colonne de direction (20) est solidaire d'une roue dentée (33) et le support diffractif (1) n'est pas monté directement sur ladite colonne de direction (20). Il est monté rotatif sur le support fixe (21) et entraîné en rotation par la roue dentée (33) via une roue dentée intermédiaire (34). Une roue dentée complémentaire non représentée, solidaire de l'axe de rotation du support diffractif (1), est également prévue. Cette roue dentée complémentaire et axiale entraîne également un jeu d'engrenages complémentaire (35) dont la fonction est identique à celle du jeu d'engrenages (27).

La source de lumière fixe (22) est disposée sur le support fixe (21) et sous le support diffractif (1). Le faisceau incident est ainsi diffracté par la piste (2) par transmission et guidé via un jeu de miroirs (24) vers les moyens de détection et de lecture (25), lesquels sont associés aux moyens électroniques de traitement et d'analyse (26) qui sont également prévus sur ledit support fixe (21).

Cet exemple de réalisation du dispositif de mesure et de détermination de la position du support diffractif (1) présente l'avantage de réunir les composants du dispositif dans un sous-ensemble fixe adjacent à la colonne de direction (20). Le sous-ensemble ainsi réalisé peut ainsi être fabriqué et assemblé de façon distincte de l'assemblage de la colonne de direction (20).

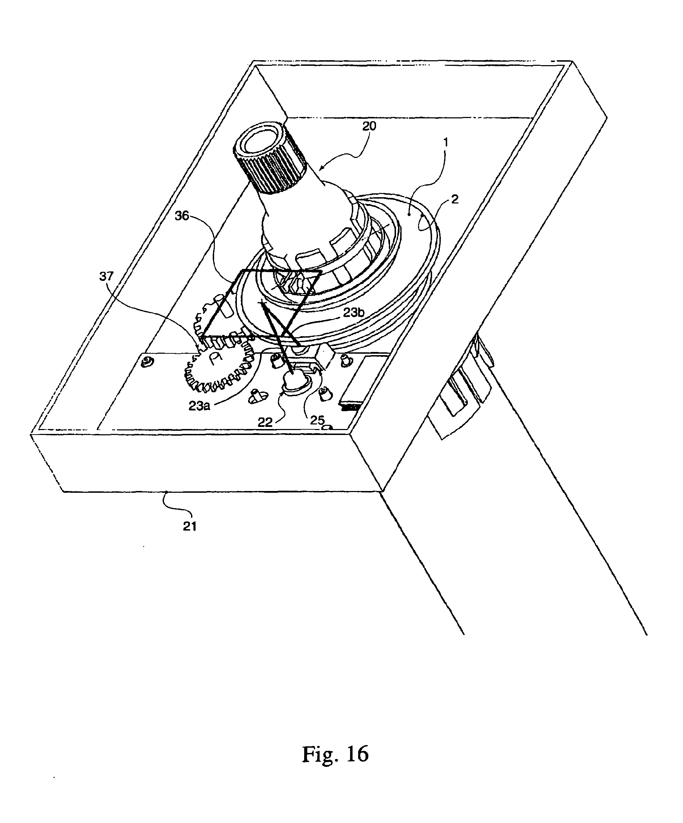

Un autre exemple de réalisation conforme à l'invention est par exemple représenté à la figure 16. Dans cette dernière, le faisceau incident (23a) est dirigé avec un angle d'incidence déterminé sur un miroir (36). Ce dernier redirige ensuite le faisceau incident (23a) sur la piste diffractive (2) laquelle émet par transmission le faisceau diffracté vers les moyens de lecture et de détection (25). L'orientation du miroir (36) permet d'optimiser le positionnement relatif entre la source de lumière (22) et les moyens de lecture et de détection (25).

La rotation du support diffractif (1) entraîne également un jeu additionnel d'engrenages (37) dont la fonction est identique à celle du jeu d'engrenages (27).

Selon un autre exemple de réalisation représenté à la figure 17, la piste diffractive (2) est directement rapportée sur la colonne de direction (20) et plus particulièrement sur une partie cylindrique. La piste diffractive est par exemple rapportée via un support autocollant sur cette partie cylindrique. La source de lumière (22) émet ainsi le faisceau incident (23a) vers la piste diffractive (2) selon une direction s'étendant sensiblement dans un plan normal à l'axe de rotation R.

Dans un tel exemple de réalisation il est possible de disposer la source de lumière (22) et les moyens de détection et de lecture (25) à distance du support diffractif (1) et par conséquent de la piste diffractive (2). Une telle réalisation présente l'avantage d'un encombrement réduit dans la mesure où il n'est pas nécessaire de disposer en dessous ou au-dessus de la piste diffractive (2) la source lumineuse (22) ou les moyens de détection et de lecture (25). En outre, la piste diffractive (2) n'augmente quasiment pas l'encombrement radial de la colonne de direction (20). Cette dernière est associée à une roue dentée (38) ainsi qu'à un jeu supplémentaire d'engrenages (39) dont la fonction est identique à celle du jeu d'engrenages (27).

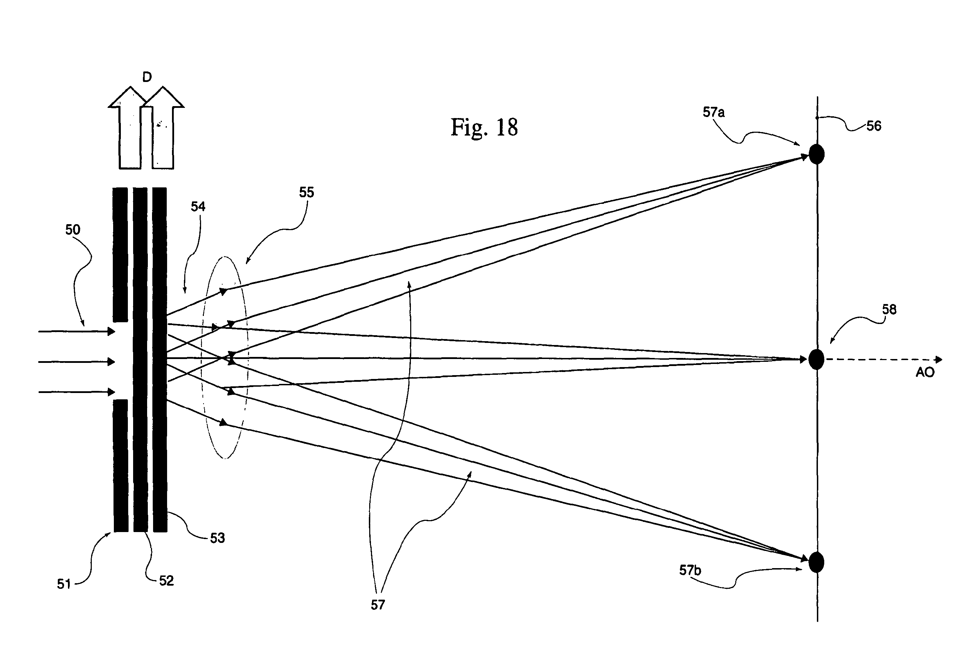

La figure 18 représente un exemple de réalisation d'un dispositif de mesure conforme à l'invention. Selon cet exemple de réalisation, un faisceau incident (50) traverse un diaphragme fixe (51). Le faisceau incident (50) est envoyé sur des supports diffractifs (52, 53) qui peuvent se déplacer selon des mouvements représentés par les flèches D.

Le faisceau incident est diffracté en (51) par le support diffractif. Il est ensuite focalisé par la lentille (55). On obtient ainsi, dans un plan (56) contenant des moyens de détection fixes, des taches lumineuses (57a, 57b) correspondant à des parties du signal constitutif de l'ordre de diffraction choisi et de son conjugué. L'ordre 0 de diffraction est repéré sur l'axe optique AO avec la référence (58).

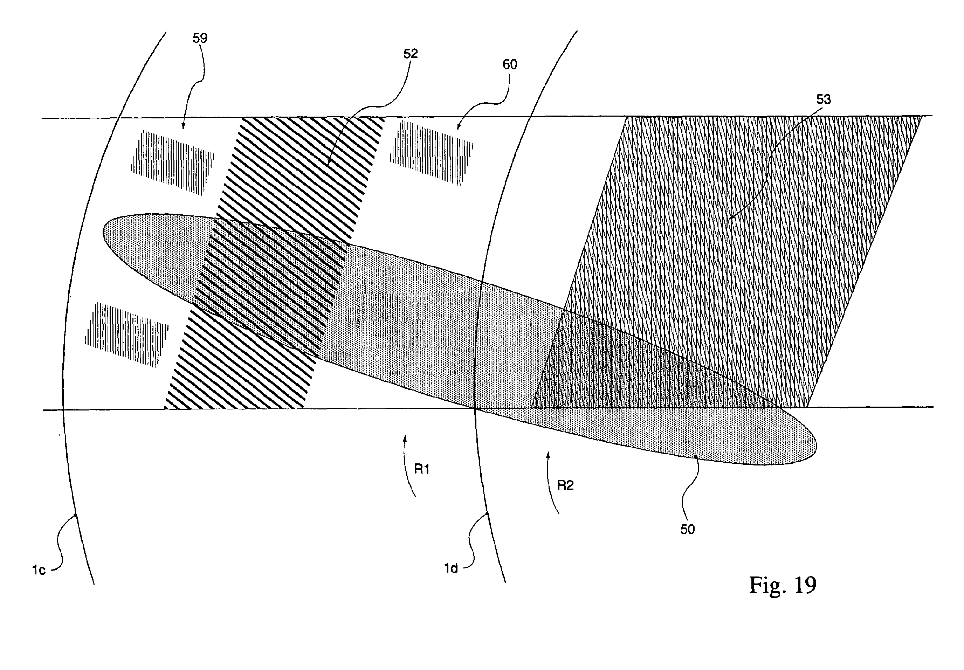

En se reportant par exemple à la figure 19, on aperçoit un exemple de conformation du faisceau incident (50).

Le faisceau incident (50) couvre ainsi deux supports diffractifs distincts (1 c, 1 d). Les supports diffractifs (1c, 1 d) comportent respectivement des pistes diffractives (52, 53) d'extension annulaire. Le second support diffractif (1 d) permet en l'occurrence, par exemple en tournant selon le sens R₂ à une vitesse moindre que le premier support diffractif (1c) tournant selon R₁, de compter le nombre de tours pour des pièces en rotation relative. Sur le premier support diffractif (1 c) est également prévue une piste diffractive complémentaire (59) permettant de générer des taches lumineuses de synchronisation, ainsi qu'une autre piste diffractive complémentaire (60) permettant de générer par exemple des taches lumineuses de calibration.

Selon la figure 19, le faisceau optique incident (50), issu par exemple d'une source laser, couvre partiellement, de par sa conformation, les pistes diffractives (52, 53) pour une position précise dans un tour de rotation bien précis.

Les formes géométriques de base, constitutives des éléments diffractifs, sont par exemple enregistrées sur des fichiers informatiques et prêtes à être fabriquées par exemple par micro-lithograpbie sur une plaque de silicium de quartz ou de verre.

D'autres modes de fabrication sont également envisageables sans sortir du cadre de la présente invention.

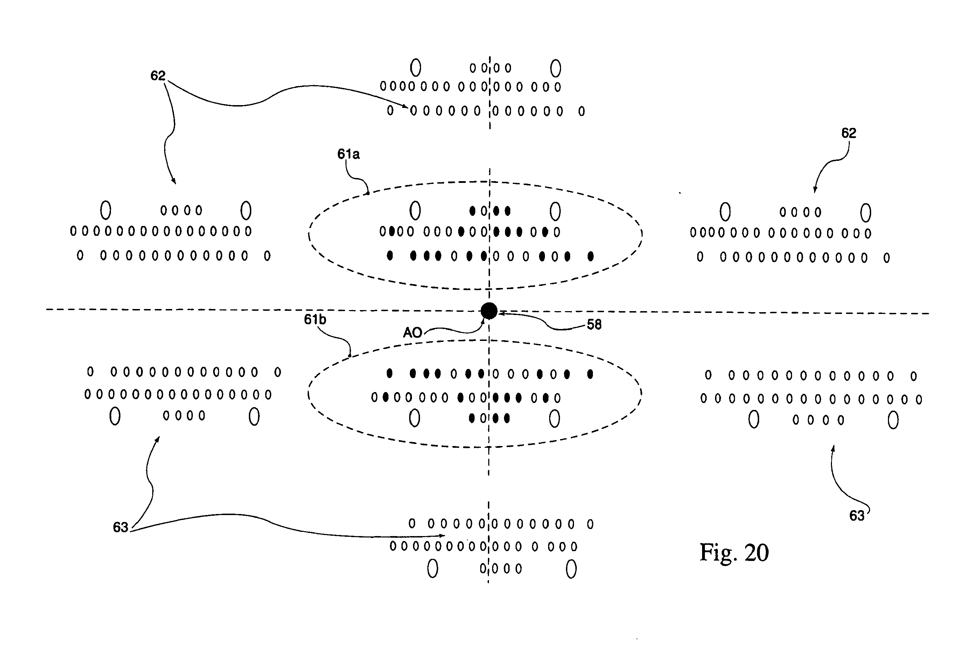

Le signal optique diffracté selon le procédé conforme à l'invention est représenté à titre d'exemple à la figure 20. Cette dernière montre des taches lumineuses dont l'intensité est plus ou moins forte, où l'on peut identifier l'ordre 0 de diffraction (58) localisé sur l'axe optique A0, ainsi que le premier ordre de diffraction positif (61 a) et le premier ordre de diffraction négatif (61 b).

Des ordres de diffraction supérieurs positifs (62), ainsi que les ordres de diffraction supérieurs négatifs (63) sont également représentés, mais non pris en compte dans l'analyse du signal optique diffracté.

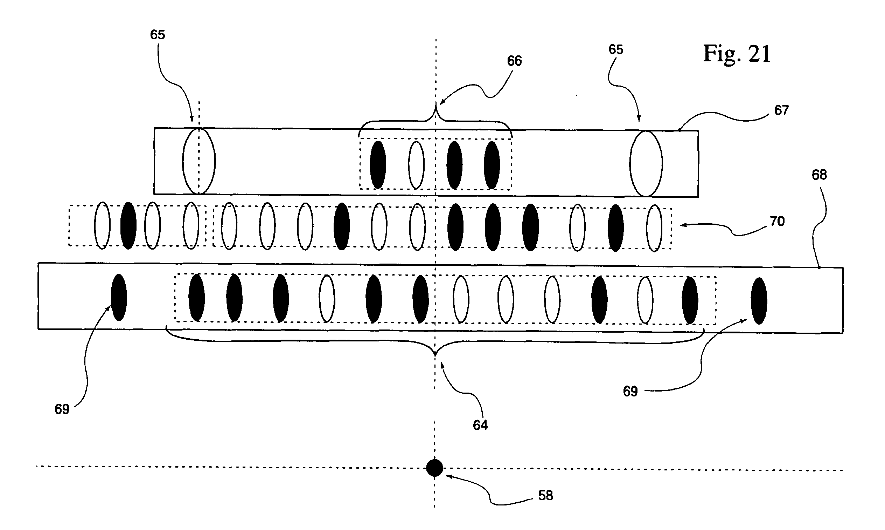

La figure 21 représente un détail de signal optique diffracté créé sur les moyens de détection après focalisation par la lentille fixe (55). Les différentes pistes diffractives permettent ainsi de créer un signal optique codé sur les moyens de détection comprenant un signal codé principal (64) sur 12 bits, des signaux de synchronisation (65) (taches lumineuses), et des signaux optiques de comptage (66) sur 4 bits reflétant le nombre de tours effectués par l'un des deux éléments en rotation relative.

Ces signaux optiques diffractés se retrouvent dans des barrettes de lecture (67, 68) des moyens de détection. Des signaux optiques de calibration (69) se retrouvent également sur la barrette de détection (68).

La figure 21 montre également des signaux optiques diffractés complémentaires (70) non pris en considération dans cet exemple par les moyens de détection, mais servant à l'uniformisation de l'intensité des taches lumineuses détectées.

## Revendications

1. Procédé de détermination de la position de l'un (20) parmi deux éléments (20, 21) en mouvement relatif l'un par rapport à l'autre, utilisant des moyens optiques et consistant à :
- diriger au moins un faisceau de lumière (23a, 50) émis par une source de lumière (22) liée à un élément (21) vers un support diffractif (1, 1c, 1d) lié au second élément (20), calculé et fabriqué pour générer un signal optique indicatif du positionnement dudit support (1, 1c, 1d), le signal optique étant produit par le support diffractif (1, 1c, 1d) en transmission et/ou en réflexion ;
- détecter et lire au moins un code optique (10, 64) constitué par ledit signal, qui correspond à une unique position du support diffractif (1, 1c, 1d) par rapport au faisceau (23a) ;
- attribuer une position à chaque code optique (10, 64) détecté,
**caractérisé en ce que** ledit code optique (10, 64) est composé de plusieurs bits constitués de structures optiques discrètes de type tache (57a, 57b) permettant une lecture binaire directe du code selon leur luminosité.

2. Procédé selon la revendication précédente, **caractérisé en ce que** le code optique (10, 64) est généré deux fois sur deux zones adjacentes, le code (70) apparaissant sur l'une des zones étant le complémentaire de l'autre.

3. Procédé selon la revendication précédente, **caractérisé en ce que** les deux codes optiques (64, 70) générés correspondent au premier ordre de diffraction et à son complémentaire (61 a, 61 b).

4. Procédé selon la revendication précédente, **caractérisé en ce qu'**au moins l'un au moins des codes complémentaire (70) ou conjugué (61 b) du code correspondant au premier ordre de diffraction (61 a) est lu et comparé à ce dernier.

5. Procédé selon l'une quelconque des revendications précédentes, **caractérisé en ce que** chaque code optique (10, 64) correspondant à une position du support diffractif (1, 1c, 1d) comporte au moins une structure optique de départ et au moins une structure optique de fin délimitant la zone de lecture.

6. Procédé selon l'une quelconque des revendications précédentes, **caractérisé en ce que** chaque code optique (10, 64) correspondant à une position du support diffractif (1, 1c, 1d) comporte au moins une structure optique de synchronisation (65), dont la détection permet d'enclencher la phase de lecture du code (10, 64).

7. Procédé selon l'une quelconque des revendications précédentes, **caractérisé en ce que** chaque code optique (10, 64) correspondant à une position du support diffractif (1, 1c, 1d) comporte au moins une structure optique de calibration (69).

8. Procédé selon l'une quelconque des revendications précédentes, **caractérisé en ce que** les structures optiques sont constituées d'au moins une tache (57a, 57b) dont l'intensité lumineuse est mesurée.

9. Procédé selon l'une quelconque des revendications précédentes, **caractérisé en ce que** les codes (10, 64) définissant la position d'un élément (20) par rapport à l'autre (21) obéissent, dans l'ordre de leur succession, au code GRAY.

10. Procédé selon l'une des revendications 8 et 9, **caractérisé en ce que** les variations de luminosité d'au moins une des taches (57a, 57b) formant la structure optique sont codées à l'aide d'un convertisseur analogique-numérique, permettant une lecture binaire ou en niveaux de gris.

11. Procédé selon l'une quelconque des revendications précédentes, **caractérisé en ce que** la source de lumière (22) est pulsée selon une fréquence asservie à la vitesse de l'élément (20) en mouvement, la lecture étant synchronisée à la génération du ou des faisceaux de lumière (23a, 50).

12. Procédé selon l'une quelconque des revendications précédentes, **caractérisé en ce qu'**il consiste à déterminer la position angulaire de l'un des éléments (20) par rapport à l'autre (21).

13. Procédé selon la revendication précédente, **caractérisé en ce que** le nombre de structures optiques utilisées pour le codage de la position angulaire est au moins égal à 12 pour permettre une résolution inférieure à 0,1° d'angle.

14. Support diffractif (1, 1c, 1d) pour un dispositif de mesure de la position d'un premier élément (20) en mouvement relatif par rapport à un second élément (21), et adapté à mettre en oeuvre le procédé conforme à l'une des revendications 1 à 13, comportant un moyen de montage (1a) sur le premier élément (20) et des zones diffractives présentant des moyens apte à diffracter par réflexion ou par transmission, un faisceau de lumière (23a, 50) émis par au moins une source lumineuse (22) fixe par rapport au second élément (21),
**caractérisé en ce qu'**il comporte au moins une piste diffractive (2, 3, 52, 53, 59, 60) continue ou non adapter à générer lorsqu'elle est éclairée par un faisceau lumineux des codes optiques (10, 64) composés de plusieurs bits constitués de structures optiques discrètes de type tache (57a, 57b) définissant selon leur luminosité des positions uniques du support (1, 1c, 1d).

15. Support diffractif (1, 1c, 1d) selon la revendication précédente, **caractérisé en ce que** la piste diffractive (2, 3, 52, 53, 59, 60) présente un relief gravé dans la matière constitutive dudit support (1, 1 c, 1 d) apte à diffracter le ou les faisceaux incidents (23a, 50) et à générer un signal optique dont la lecture permet l'identification de la position du premier élément (20) par rapport au second élément (21), par identification du code (10, 64) constitué par le signal.

16. Support diffractif (1, 1 c, 1 d) selon la revendication 14, **caractérisé en ce que** la piste diffractive (2, 3, 52, 53, 59, 60) est obtenue par modulation de la transparence du support (1, 1c, 1 d), par exemple en appliquant une matière opaque à certains endroits sur un support transparent, en vue de diffracter le ou les faisceaux incidents (23a, 50) et à générer un signal optique dont la lecture permet l'identification de la position du premier élément (20) par rapport au second élément (21), par identification du code (10, 64) constitué par le signal.

17. Support diffractif (1, 1c, 1d) selon l'une des revendications 15 et 16, **caractérisé en ce que** la distribution et la géométrie de la modulation des reliefs ou de la transparence du support (1, 1c, 1d) sont calculées par ordinateur.

18. Support diffractif (1, 1c, 1d) selon la revendication précédente, **caractérisé en ce que** chaque piste (2, 3, 52, 53, 59, 60) est divisée en zones de structure diffractive individualisée (13) générant un code (10, 64) correspondant à une position du support (1, 1c, 1d), chaque zone (13) comportant une pluralité de formes élémentaires d'allure parallélogrammique, disposées sous forme de grille périodique ou apériodique générant les mêmes structures optiques constituant le code (10, 64).

19. Support diffractif (1, 1c, 1d) selon l'une quelconque des revendications 14 à 18, **caractérisé en ce qu'**il comporte ;
- un disque rigide ;
- un moyen de montage (1 a) à un arbre rotatif (20) ;
- au moins une piste diffractive (2, 3, 52, 53, 59, 60) de forme annulaire.

20. Support diffractif (1, 1c, 1 d) selon les revendications 18 et 19, **caractérisé en ce que** chaque piste (2, 3, 52, 53, 59, 60) est divisée en des secteurs angulaires équisurfaciques constituant chacun une zone de structure diffractive individualisée (13).

21. Support diffractif (1, 1c, 1d) selon la revendication précédente, **caractérisé en ce que** les secteurs angulaires (13) présentent des dimensions de l'ordre de 10 µm à 100 µm.

22. Support diffractif (1, 1c, 1d) selon la revendication 20 ou 21, **caractérisé en ce qu'**au moins une piste (2, 3, 52, 53, 59, 60) comprend 4 096 secteurs angulaires (13).

23. Support diffractif (1, 1c, 1d) selon l'une des revendications 19 à 22, **caractérisé en ce que** le disque comporte, à sa périphérie, une portion tronconique dont une surface inclinée comporte au moins une piste diffractive (2, 3, 52, 53, 59, 60).

24. Support diffractif (1, 1c, 1d) selon l'une des revendications 14 à 23, **caractérisé en ce que** au moins une piste diffractive (2, 3, 52, 53, 59, 60) est disposée sur un support souple collable au support.

25. Dispositif de mesure de la position d'un premier élément (20) en mouvement relatif par rapport à un second élément (21), avec un support diffractif (1, 1c, 1d) selon l'une quelconque des revendications 14 à 24, comportant :
- au moins une source de lumière fixe (22), émettant au moins un faisceau lumineux (23a, 50) sur au moins un support diffractif (1, 1c, 1d) mobile ;
- des moyens de détection et de lecture (25) d'un signal optique obtenu par diffraction du ou des faisceaux lumineux (23a, 50) par transmission ou réflexion à partir du ou des supports diffractifs (1, 1c, 1d) ;
- des moyens de traitement (26) du code optique (10, 64) résultant du signal détecté permettant de déterminer la position du ou des supports diffractifs (1, 1c, 1d) par rapport au(x) faisceau(x) (23a, 50),
**caractérisé en ce que** ledit code optique (10, 64) est composé de plusieurs bits constitués de structures optiques discrètes de type tache (57a, 57b) définissant une unique position du premier élément (20) par rapport au second élément (21), les moyens de traitement (26) permettant une détection au moins binaire des structures formant le code (10, 64) selon leur luminosité.

26. Dispositif de mesure selon la revendication précédente, **caractérisé en ce qu'**il comporte des moyens de mémoriser la position obtenue.

27. Dispositif de mesure selon la revendication 28 ou 29, **caractérisé en ce que** le faisceau incident (23a, 50) est obtenu à partir d'une source de lumière (22) cohérente.

28. Dispositif de mesure selon la revendication précédente, **caractérisé en ce que** la source de lumière (22) cohérente est une diode laser.

29. Dispositif de mesure selon l'une quelconque des revendications 25 à 28, **caractérisé en ce que** le ou les faisceaux lumineux (23a, 50) sont envoyés vers le ou les supports diffractifs (1, 1c, 1 d) via au moins un élément optique de relais du type lentille, prisme, élément diffractif, élément réflectif (24, 36), élément réfractif et/ou via au moins un élément optique de guidage du type fibre optique ou guide d'onde (31).

30. Dispositif de mesure selon l'une quelconque des revendications 25 à 29, **caractérisé en ce que** le ou les faisceaux (23a, 50) sont envoyés vers le ou les supports diffractifs (1,1c,1d) via au moins un organe exerçant une fonction de collimation (12), de focalisation ou d'astigmatisme.

31. Dispositif de mesure selon l'une quelconque des revendications 29 et 30, **caractérisé en ce que** des éléments optiques de relais, de guidage (24) ou exerçant une fonction de collimation, de focalisation (55) ou d'astigmatisme sont utilisés en sortie du ou des supports diffractifs (1, 1c, 1d).

32. Dispositif de mesure selon l'une quelconque des revendications 25 à 31, **caractérisé en ce que** le ou les faisceaux lumineux (23a, 50) sont envoyés vers le ou les supports diffractifs via au moins un diaphragme de conformation (12, 51).

33. Dispositif selon l'une quelconque des revendications 25 à 32, **caractérisé en ce que** les moyens de détection et de lecture (25) des codes optiques (10, 64) diffractés consistent en des photodétecteurs du type barrettes réseaux ou matrices de pixels, capteurs CCD, photodiodes, ou encore cellules photoétectriques ou photovoltaïques disposés sur la trajectoire des rayons diffractés (23b) par le ou les supports diffractifs (1, 1c, 1d).

34. Dispositif de mesure selon la revendication précédente, **caractérisé en ce que** les photodétecteurs sont disposés de telle sorte que chaque structure optique diffractée obtenue à l'endroit où un rayon diffracté (23b) rencontre un réseau de pixels couvre au moins 3 pixels.

35. Dispositif selon l'une quelconque des revendications 33 et 34, **caractérisé en ce que** le nombre de pixels entre deux taches adjacentes (57a, 57b) est fixé à au moins 3 pixels.

36. Dispositif selon l'une quelconque des revendications 25 à 35, **caractérisé en ce que** le rayon lumineux (50, 23a) est dirigé selon une incidence normale au support diffractif (1, 1c, 1d).

37. Dispositif selon l'une quelconque des revendications 25 à 35, **caractérisé en ce que** le rayon lumineux (23a, 50) est incliné en direction du support diffractif (1, 1c, 1d), d'un angle compris entre 0° et 17°, par rapport à la normale au support diffractif (1, 1c, 1d).

38. Dispositif selon l'une quelconque des revendications 25 à 37, **caractérisé en ce qu'**il comporte des moyens de synchronisation permettant de détecter et lire un code optique (10, 64) généré par une structure diffractive individualisée lorsque le faisceau (23a, 50) émis par la source lumineuse (22) est centré sur ladite structure.

39. Dispositif de mesure selon la revendication précédente, **caractérisé en ce que** les moyens de synchronisation comportent des photodétecteurs spécifiques dédiés à la détection de structures optiques obtenues indépendamment de celles constituant le code (10, 64) de la position à mesurer, par exemples des taches lumineuses (57a, 57b) disposées sur au moins une piste diffractive (59) spécifiquement dévolue à la synchronisation.

40. Dispositif de mesure selon l'une quelconque des revendications 25 à 39, **caractérisé en ce qu'**il permet la mesure du mouvement rotatif appliqué à au moins un support diffractif (1, 1c, 1d) solidaire d'un arbre rotatif (20).

41. Dispositif de mesure selon la revendication précédente, **caractérisé en ce qu'**il comporte deux disques rotatifs diffractifs (1c, 1d) superposés, l'un (1c) comportant la mesure des positions angulaires sur un tour et l'autre (1d), tournant N fois moins vite, permettant la mesure du nombre de tours accomplis dans la limite de N tours.

42. Dispositif de mesure selon l'une quelconque des revendications 25 à 41, **caractérisé en ce qu'**un seul composant formant guide de lumière fait simultanément office de diaphragme, lentille de collimation, miroir(s), logement de protection pour la diode laser et les photodétecteurs.

43. Colonne de direction (20) d'un véhicule comportant un dispositif de mesure de position conforme à l'une quelconque des revendications 28 et 42.

## Claims

1. Process for determination of the position of one (20) of two elements (20, 21) in relative motion one relative to the other, using optical means and consisting of:
- directing at least one light beam (23a, 50) emitted by a light source (22) joined to one element (21) at a diffractive support (1, 1c, 1d) joined to the second element (20), calculated and produced to generate an optical signal indicative of the positioning of the said support (1, 1c, 1d), the optical signal being produced by the diffractive support (1, 1 c, 1 d) in transmission and/or in reflection;
- detecting and reading at least one optical code (10, 64) formed by the said signal, which corresponds to a unique position of the diffractive support (1, 1c, 1 d) relative to the beam (23a);
- attributing a position to each optical code (10, 64) detected,
**characterised by** the fact that the said optical code (10, 64) is composed of a plurality of bits formed of discrete optical structures of spot type (57a, 57b) permitting direct binary reading of the code as a function of their luminosity.

2. Process as described in the preceding claim, **characterised by** the fact that the optical code (10, 64) is generated twice on two adjacent zones, the code (70) appearing on one of the zones being complementary to the other.

3. Process as described in the preceding claim, **characterised by** the fact that the two optical codes (64, 70) generated correspond to the first order diffraction and to its complement (61 a, 61 b).

4. Process as described in the preceding claim, **characterised by** the fact that at least one at least of the complementary (70) or conjugate (61 b) codes of the code corresponding to the first order diffraction (61 a) is read and compared with the latter.

5. Process as described in any one of the preceding claims, **characterised by** the fact that each optical code (10, 64) corresponding to a position of the diffractive support (1, 1c, 1 d) includes at least one start optical structure and at least one end optical structure defining the reading zone.

6. Process as described in any one of the preceding claims, **characterised by** the fact that each optical code (10, 64) corresponding to a position of the diffractive support (1, 1c, 1 d) includes at least one optical synchronisation structure (65), detection of which permits starting of the phase of reading the code (10, 64).

7. Process as described in any one of the preceding claims, **characterised by** the fact that each optical code (10, 64) corresponding to a position of the diffractive support (1, 1c, 1 d) includes at least one optical calibration structure (69).

8. Process as described in any one of the preceding claims, **characterised by** the fact that the optical structures are formed of at least one spot (57a, 57b) the luminous intensity of which is measured.

9. Process as described in any one of the preceding claims, **characterised by** the fact that the codes (10, 64) defining the position of one element (20) relative to the other (21) obey the GRAY code in their order of succession.

10. Process as described in one of claims 8 and 9, **characterised by** the fact that the variations in luminosity of at least one of the spots (57a, 57b) forming the optical structure are coded using an analogue-digital convertor, permitting binary reading in greyscale.

11. Process as described in any one of the preceding claims, **characterised by** the fact that the light source (22) is pulsed at a frequency dependent on the velocity of the element (20) in motion, reading being synchronised with the generation of the beam or beams of light (23a, 50).

12. Process as described in any one of the preceding claims, **characterised by** the fact that it consists of determining the angular position of one of the elements (20) relative to the other (21).

13. Process as described in the preceding claim, **characterised by** the fact that the number of optical structures used for coding the angular position is equal to at least 12 to allow a resolution of less than 0.1° of angle.

14. Diffractive support (1, 1 c, 1 d) for a device for measuring the position of a first element (20) in relative motion relative to a second element (21), and suitable to implement the process as described in one of claims 1 to 13, including a mounting means (1 a) of the first element (20) and diffractive zones presenting means able to diffract by reflection or transmission a light beam (23a, 50) emitted by at least one light source (22) fixed relative to the second element (21),
**characterised by** the fact that it includes at least one diffractive track (2, 3, 52, 53, 59, 60) which is continuous or otherwise, suitable, when it is illuminated by a light beam, to generate optical codes (10, 64) composed of a plurality of bits formed of discrete optical structures of spot type (57a, 57b) defining, as a function of their luminosity, unique positions of the support (1, 1 c, 1 d).

15. Diffractive support (1, 1c, 1 d) as described in the preceding claim, **characterised by** the fact that the diffractive track (2, 3, 52, 53, 59, 60) presents a relief engraved in the material forming the said support (1, 1c, 1d) able to diffract the incident light beam or beams (23a, 50) and to generate an optical signal, reading of which permits identification of the position of the first element (20) relative to the second element (21), by identification of the code (10, 64) formed by the signal.

16. Diffractive support (1, 1 c, 1 d) as described in claim 14, **characterised by** the fact that the diffractive track (2, 3, 52, 53, 59, 60) is obtained by modulation of the transparency of the support (1, 1c, 1 d), for example by applying an opaque material to certain places on a transparent support, in order to diffract the incident beam or beams (23a, 50) and to generate an optical signal reading of which permits identification of the position of the first element (20) relative to the second element (21), by identification of the code (10, 64) formed by the signal.

17. Diffractive support (1, 1 c, 1 d) as described in one of claims 15 and 16, **characterised by** the fact that the distribution and geometry of the modulation of the reliefs or of the transparency of the support (1, 1 c, 1 d) are calculated by computer.

18. Diffractive support (1, 1c, 1 d) as described in the preceding claim, **characterised by** the fact that each track (2, 3, 52, 53, 59, 60) is divided into zones of individualised diffractive structure (13) generating a code (10, 64) corresponding to a position of the support (1, 1c, 1d), each zone (13) including a plurality of elementary forms of parallelogrammic appearance, arranged in the form of a periodic or aperiodic grid generating the same optical structures forming the code (10, 64).

19. Diffractive support (1, 1 c, 1 d) as described in any one of claims 14 to 18, **characterised by** the fact that it includes:
- a rigid disc;
- a means (1 a) for mounting on a rotary shaft (20);
- at least one diffractive track (2, 3, 52, 53, 59, 60) of annular form.

20. Diffractive support (1, 1 c, 1 d) as described in claims 18 and 19, **characterised by** the fact that each track (2, 3, 52, 53, 59, 60) is divided into angular sectors of equal area each forming a zone of individualised diffractive structure (13).

21. Diffractive support (1, 1 c, 1 d) as described in the preceding claim, **characterised by** the fact that the angular sectors (13) have dimensions of the order of 10 µm to 100 µm.

22. Diffractive support (1, 1 c, 1 d) as described in claim 20 or 21, **characterised by** the fact that at least one track (2, 3, 52, 53, 59, 60) comprises 4 096 angular sectors (13).

23. Diffractive support (1, 1 c, 1 d) as described in one of claims 19 to 22, **characterised by** the fact that, on its periphery, the disc includes a portion in the form of a truncated cone, an inclined surface of which includes at least one diffractive track (2, 3, 52, 53, 59, 60).

24. Diffractive support (1, 1 c, 1 d) as described in one of claims 14 to 23, **characterised by** the fact that at least one diffractive track (2, 3, 52, 53, 59, 60) is arranged on a flexible support which can be adhered to the support.

25. Device for measuring the position of a first element (20) in relative motion relative to a second element (21), with a diffractive support (1, 1c, 1d) as described in any one of claims 14 to 24, including:
- at least one fixed light source (22) emitting at least one light beam (23a, 50) onto at least one movable diffractive support (1, 1c, 1 d);
- means for detection and reading (25) of an optical signal obtained by diffraction of the light beam or beams (23a, 50) by transmission or reflection from the diffractive support or supports (1, 1c, 1 d);
- means for processing (26) the optical code (10, 64) resulting from the detected signal permitting determination of the position of the diffractive support or supports (1, 1c, 1d) relative to the light beam(s) (23a, 50),
**characterised by** the fact that the said optical code (10, 64) is composed of a plurality of bits formed of discrete optical structures of spot type (57a, 57b) defining a unique position of the first element (20) relative to the second element (21), the processing means (26) permitting at least binary detection of the structures forming the optical code (10, 64) as a function of their luminosity.

26. Measuring device as described in the preceding claim, **characterised by** the fact that it includes means for storing the position obtained in memory.

27. Measuring device as described in claim 28 or 29, **characterised by** the fact that the incident beam (23a, 50) is obtained from a coherent light source (22).

28. Measuring device as described in the preceding claim, **characterised by** the fact that the coherent light source (22) is a laser diode.

29. Measuring device as described in any one of claims 25 to 28, **characterised by** the fact that the light beam or beams (23a, 50) are sent to the diffractive support or supports (1, 1c, 1d) via at least one optical relay element of lens, prism, diffractive element, reflective element (24, 36), or refractive element type and/or via at least one optical guiding element of the optical fibre or waveguide type (31).

30. Measuring device as described in any one of claims 25 to 29, **characterised by** the fact that the beam or beams (23a, 50) are sent to the diffractive support or supports (1, 1c, 1 d) via at least one organ applying a collimation (12) focussing or astigmatism function.

31. Measuring device as described in any one of claims 29 and 30, **characterised by** the fact that optical relay or guiding (24) elements or applying a collimation, focussing (55) or astigmatism function are used at the output of the diffractive support or supports (1, 1c, 1d).

32. Measuring device as described in any one of claims 25 to 31, **characterised by** the fact that the light beam or beams (23a, 50) are sent to the diffractive support or supports via at least one conformation diaphragm (12, 51).

33. Device as described in any one of claims 25 to 32, **characterised by** the fact that the means for detection and reading (25) of the diffracted optical codes (10, 64) consist of photodetectors of the type of array strips or matrices of pixels, CCD sensors, photodiodes, or photoelectric or photovoltaic cells arranged on the trajectory of the light rays diffracted (23b) by the diffractive support or supports (1, 1c, 1d).

34. Measuring device as described in the preceding claim, **characterised by** the fact that the photodetectors are so arranged that each diffracted optical structure obtained at the place at which a diffracted ray (23b) meets a pixel array covers at least 3 pixels.

35. Device as described in any one of claims 33 and 34, **characterised by** the fact that the number of pixels between two adjacent spots (57a, 57b) is fixed at at least 3 pixels.

36. Device as described in any one of claims 25 to 35, **characterised by** the fact that the light ray (50, 23a) is directed at normal incidence to the diffractive support (1, 1c, 1d).

37. Device as described in any one of claims 25 to 35, **characterised by** the fact that the light ray (23a, 50) is inclined towards the diffractive support (1, 1c, 1 d) by an angle of between 0° and 17°, relative to the normal to the diffractive support (1, 1c, 1d).

38. Device as described in any one of claims 25 to 37, **characterised by** the fact that it includes synchronisation means permitting detection and reading of an optical code (10, 64) generated by an individualised diffractive structure when the beam (23a, 50) emitted by the light source (22) is centred on the said structure.

39. Measuring device as described in the preceding claim, **characterised by** the fact that the synchronisation means include specific photodetectors dedicated to the detection of optical structures obtained independently of those forming the code (10, 64) of the position to be measured, for example light spots (57a, 57b) arranged on at least one diffractive track (59) specifically reserved for synchronisation.

40. Measuring device as described in any one of claims 25 to 39, **characterised by** the fact that it permits measurement of the rotary motion applied to at least one diffractive support (1, 1c, 1 d) attached to a rotary shaft (20).

41. Measuring device as described in the preceding claim, **characterised by** the fact that it includes two superimposed diffractive rotary discs (1c, 1 d), one (1 c) including the measurement of angular positions over one turn and the other (1d), turning N times less quickly, permitting the measurement of the number of turns performed within the limit of N turns.

42. Measuring device as described in any one of claims 25 to 41, **characterised by** the fact that a single component forming a light guide acts simultaneously as diaphragm, collimation lens, mirror(s) and protection housing for the laser diode and the photodetectors.

43. Vehicle steering column (20 including a position measurement device as described in any one of claims 28 and 42.

## Patentansprüche

1. Verfahren zur Bestimmung der Position eines Elementes (20) von zwei sich relativ zueinander bewegenden Elementen (20, 21), welches optische Mittel verwendet und darin besteht:
- wenigstens einen Lichtstrahl (23a, 50), der von einer mit einem Element (21) verbundenen Lichtquelle (22) ausgesendet wird, zu einem mit dem zweiten Element (20) verbundenen diffraktiven Träger (1, 1c, 1d) zu lenken, der solchermaßen berechnet und hergestellt ist, dass er ein optisches Signal zur Erkennung der Positionierung dieses Trägers (1, 1 c, 1 d) erzeugt, wobei das optische Signal von dem diffraktiven Träger (1, 1c, 1d) durch Übertragung und/oder Reflexion erzeugt wird;
- wenigstens einen durch das Signal gebildeten optischen Code (10, 64) zu erfassen und zu lesen, der einer einzigen Position des diffraktiven Trägers (1, 1c, 1d) bezüglich des Lichtstrahls (23a) entspricht;
- jedem erfassten optischen Code (10, 64) eine Position zuzuordnen;
**dadurch gekennzeichnet, dass** der optische Code (10, 64) aus mehreren Bits zusammengesetzt ist, die von diskreten optischen Strukturen in Form von Flecken (57a, 57b) gebildet sind, die ein direktes binäres Lesen des Codes in Abhängigkeit von ihrer Leuchtkraft ermöglichen.

2. Verfahren nach dem vorhergehenden Anspruch, **dadurch gekennzeichnet, dass** der optische Code (10, 64) zweimal in zwei aneinander grenzenden Zonen erzeugt wird, wobei der in einer der Zonen auftretende Code (70) zum anderen komplementär ist.

3. Verfahren nach dem vorhergehenden Anspruch, **dadurch gekennzeichnet, dass** die beiden erzeugten optischen Codes (64, 70) der ersten Beugungsordnung und ihrer komplementären Ordnung (61a, 61b) entsprechen.

4. Verfahren nach dem vorhergehenden Anspruch, **dadurch gekennzeichnet, dass** wenigstens einer der komplementären (70) oder konjugierten Codes (61b) des der ersten Beugungsordnung (61a) entsprechenden Codes gelesen und mit diesem verglichen wird.

5. Verfahren nach einem der vorhergehenden Ansprüche, **dadurch gekennzeichnet, dass** jeder optische Code (10, 64), der einer Position des diffraktiven Trägers (1, 1c, 1d) entspricht, wenigstens eine optische Anfangsstruktur und wenigstens eine optische Endstruktur aufweist, die den Lesebereich abgrenzen.

6. Verfahren nach einem der vorhergehenden Ansprüche, **dadurch gekennzeichnet, dass** jeder optische Code (10, 64), der einer Position des diffraktiven Trägers (1, 1c, 1d) entspricht, wenigstens eine optische Synchronisationsstruktur (65) aufweist, deren Erfassung es ermöglicht, die Phase des Lesens des Codes (10, 64) auszulösen.

7. Verfahren nach einem der vorhergehenden Ansprüche, **dadurch gekennzeichnet, dass** jeder optische Code (10, 64), der einer Position des diffraktiven Trägers (1, 1c, 1d) entspricht, wenigstens eine optische Kalibrierungsstruktur (69) aufweist.

8. Verfahren nach einem der vorhergehenden Ansprüche, **dadurch gekennzeichnet, dass** die optischen Strukturen von wenigstens einem Fleck (57a, 57b) gebildet sind, dessen Lichtstärke gemessen wird.

9. Verfahren nach einem der vorhergehenden Ansprüche, **dadurch gekennzeichnet, dass** die Codes (10, 64), welche die Position eines Elements (20) bezüglich des anderen (21) definieren, in ihrer Aufeinanderfolge dem GRAY-Code entsprechen.

10. Verfahren nach einem der Ansprüche 8 und 9, **dadurch gekennzeichnet, dass** die Veränderungen der Leuchtkraft wenigstens eines der Flecken (57a, 57b), welche die optische Struktur bilden, mithilfe eines Analog-Digital-Umsetzers codiert werden, der ein binäres Lesen oder ein Lesen in Graustufen ermöglicht.

11. Verfahren nach einem der vorhergehenden Ansprüche, **dadurch gekennzeichnet, dass** sich die Impulse der Lichtquelle (22) nach einer an die Geschwindigkeit des sich bewegenden Elements (20) gebundenen Frequenz richten, wobei das Lesen mit der Erzeugung des oder der Lichtstrahlen (23a, 50) synchronisiert ist.

12. Verfahren nach einem der vorhergehenden Ansprüche, **dadurch gekennzeichnet, dass** es darin besteht, die Winkelposition eines der Elemente (20) bezüglich des anderen Elements (21) zu bestimmen.

13. Verfahren nach dem vorhergehenden Anspruch, **dadurch gekennzeichnet, dass** die Anzahl der zur Codierung der Winkelposition verwendeten optischen Strukturen wenigstens gleich 12 ist, um eine Auflösung kleiner als 0,1 Winkelgrad zu ermöglichen.

14. Diffraktiver Träger (1, 1 c, 1 d) für eine Vorrichtung zum Messen der Position eines ersten, sich relativ zu einem zweiten Element (21) bewegenden Elements (20), die zur Anwendung des Verfahrens gemäß einem der Ansprüche 1 bis 13 geeignet ist, wobei der Träger ein Mittel (1 a) zur Montage auf dem ersten Element (20) sowie diffraktive Zonen mit Mitteln umfasst, die einen Lichtstrahl (23a, 50), der von wenigstens einer bezüglich des zweiten Elements (21) ortsfesten Lichtquelle (22) ausgesendet wird, durch Reflexion oder durch Übertragung zu beugen vermögen,
**dadurch gekennzeichnet, dass** er wenigstens eine kontinuierliche oder nicht kontinuierliche diffraktive Spur (2, 3, 52, 53, 59, 60) aufweist, die, wenn sie von einem Lichtstrahl beleuchtet wird, optische Codes (10, 64) zu erzeugen vermag, die aus mehreren Bits zusammengesetzt sind, welche von diskreten optischen Strukturen in Form von Flecken (57a, 57b) gebildet sind, die in Abhängigkeit von ihrer Leuchtkraft jeweils eine einzige Position des Trägers (1, 1 c 1 d) definieren.

15. Diffraktiver Träger (1, 1 c, 1 d) nach dem vorhergehenden Anspruch, **dadurch gekennzeichnet, dass** die diffraktive Spur (2, 3, 52, 53, 59, 60) ein in das Grundmaterial des Trägers (1, 1 c, 1 d) eingraviertes Relief aufweist, das den oder die einfallenden Stahlen (23a, 50) zu beugen und ein optisches Signal zu erzeugen vermag, das, nachdem es gelesen wurde, die Identifizierung der Position des ersten Elements (20) bezüglich des zweiten Elements (21) durch Identifizierung des von dem Signal gebildeten Codes (10, 64) ermöglicht.

16. Diffraktiver Träger (1, 1 c, 1 d) nach Anspruch 14, **dadurch gekennzeichnet, dass** die diffraktive Spur (2, 3, 52, 53, 59, 60) durch eine Modulation der Transparenz des Trägers (1, 1 c, 1 d) erzielt wird, indem beispielsweise ein lichtundurchlässiges Material an bestimmten Stellen auf einen transparenten Träger aufgebracht wird, um den oder die einfallenden Strahlen (23a, 50) zu beugen und ein optisches Signal zu erzeugen, das, nachdem es gelesen wurde, die Identifizierung der Position des ersten Elements (20) bezüglich des zweiten Elements (21) durch Identifizierung des von dem Signal gebildeten Codes (10, 64) ermöglicht.

17. Diffraktiver Träger (1, 1c, 1d) nach Anspruch 15 und 16, **dadurch gekennzeichnet, dass** die Verteilung und die Geometrie der Modulation der Reliefs bzw. der Transparenz des Trägers (1, 1 c, 1 d) von einem Rechner berechnet werden.

18. Diffraktiver Träger (1, 1 c, 1 d) nach dem vorhergehenden Anspruch, **dadurch gekennzeichnet, dass** jede Spur (2, 3, 52, 53, 59, 60) in Zonen mit individualisierter diffraktiver Struktur (13) unterteilt ist, die einen einer Position des Trägers (1, 1 c, 1 d) entsprechenden Code (10, 64) erzeugen, wobei jede Zone (13) eine Vielzahl elementarer Formen mit Parallelogrammverlauf aufweist, die in Form eines periodischen oder aperiodischen Rasters angeordnet sind, das dieselben optischen Strukturen erzeugt, die den Code (10, 64) bilden.

19. Diffraktiver Träger (1, 1c, 1d) nach einem der Ansprüche 14 bis 18, **dadurch gekennzeichnet, dass** er umfasst :
- eine starre Scheibe,
- ein Mittel (1a) zur Montage an einer Rotationswelle (20),
- wenigstens eine ringförmige diffraktive Spur (2, 3, 52, 53, 59, 60).

20. Diffraktiver Träger (1, 1c, 1d) nach Anspruch 18 und 19, **dadurch gekennzeichnet, dass** jede Spur (2, 3, 52, 53, 59, 60) in gleichflächige Winkelsektoren unterteilt ist, die jeweils eine Zone mit individualisierter diffraktiver Struktur (13) bilden.

21. Diffraktiver Träger (1, 1 c, 1 d) nach dem vorhergehenden Anspruch, **dadurch gekennzeichnet, dass** die Winkelsektoren (13) Abmessungen in der Größenordnung von 10 µm bis 100 µm aufweisen.

22. Diffraktiver Träger (1, 1 c, 1 d) nach Anspruch 20 oder 21, **dadurch gekennzeichnet, dass** wenigstens eine Spur (2, 3, 52, 53, 59, 60) 4 096 Winkelsektoren (13) umfasst.

23. Diffraktiver Träger (1, 1c, 1d) nach einem der Ansprüche 19 bis 22, **dadurch gekennzeichnet, dass** die Scheibe an ihrem Umfang einen kegelstumpfförmigen Teil aufweist, von dem eine geneigte Fläche wenigstens eine diffraktive Spur (2, 3, 52, 53, 59, 60) umfasst.

24. Diffraktiver Träger (1, 1 c, 1 d) nach einem der Ansprüche 14 bis 23, **dadurch gekennzeichnet, dass** wenigstens eine diffraktive Spur (2, 3, 52, 53, 59, 60) auf einem elastischen Träger angeordnet ist, der mit dem Träger verklebt werden kann.

25. Vorrichtung zum Messen der Position eines ersten Elements (20), das sich relativ zu einem zweiten Element (21) bewegt, mit einem diffraktiven Träger (1, 1 c, 1 d) nach einem der Ansprüche 14 bis 24, die umfasst :
- wenigstens eine ortsfeste Lichtquelle (22), die wenigstens einen Lichtstrahl (23a, 50) auf wenigstens einen beweglichen diffraktiven Träger (1, 1c, 1d) aussendet;
- Mittel zum Erfassen und Lesen (25) eines optischen Signals, das man durch Beugung des oder der Lichtstrahlen (23a, 50) mittels Übertragung oder Reflexion ausgehend von dem oder den diffraktiven Trägern (1, 1c, 1d) erhält;
- Mittel zur Verarbeitung (26) des aus dem erfassten Signal resultierenden optischen Codes (10, 64), die es ermöglichen, die Position des oder der diffraktiven Träger (1, 1c, 1d) bezüglich des oder der Lichtstrahlen (23a, 50) zu bestimmen;
**dadurch gekennzeichnet, dass** der optische Code (10, 64) aus mehreren Bits zusammengesetzt ist, die von diskreten optischen Strukturen in Form von Flecken (57a, 57b) gebildet sind, die jeweils eine einzige Position des ersten Elements (20) bezüglich des zweiten Elements (21) definieren, wobei die Verarbeitungsmittel (26) eine wenigstens binäre Erfassung der den Code (10, 64) bildenden Strukturen in Abhängigkeit von ihrer Leuchtkraft ermöglichen.

26. Messvorrichtung nach dem vorhergehenden Anspruch, **dadurch gekennzeichnet, dass** sie Mittel zum Speichern der ermittelten Position umfasst.

27. Messvorrichtung nach Anspruch 28 oder 29, **dadurch gekennzeichnet, dass** man den einfallenden Strahl (23a, 50) ausgehend von einer kohärenten Lichtquelle (22) erhält.

28. Messvorrichtung nach dem vorhergehenden Anspruch, **dadurch gekennzeichnet, dass** die kohärente Lichtquelle (22) eine Laserdiode ist.

29. Messvorrichtung nach einem der Ansprüche 25 bis 28, **dadurch gekennzeichnet, dass** der oder die Lichtstrahlen (23a, 50) über wenigstens ein optisches Zwischenelement des Typs Linse, Prisma, diffraktives Element, reflektives Element (24, 36), refraktives Element und/oder über wenigstens ein optisches Leitelement des Typs optische Faser oder Wellenleiter (31) zu dem oder den diffraktiven Trägern (1, 1c, 1d) gesendet werden.

30. Messvorrichtung nach einem der Ansprüche 25 bis 29, **dadurch gekennzeichnet, dass** der oder die Lichtstrahlen (23a, 50) über wenigstens ein Element zu dem oder den diffraktiven Trägern (1, 1c, 1d) gesendet werden, das eine Kollimations- (12), Fokussierungs- oder Astigmatismusfunktion erfüllt.

31. Messvorrichtung nach einem der Ansprüche 29 und 30, **dadurch gekennzeichnet, dass** optische Zwischenelemente, Leitelemente (24) oder eine Kollimations-, Fokussierungs- (55) oder Astigmatismusfunktion erfüllende Elemente am Ausgang des oder der diffraktiven Träger (1, 1c, 1d) verwendet werden.

32. Messvorrichtung nach einem der Ansprüche 25 bis 31, **dadurch gekennzeichnet, dass** der oder die Lichtstrahlen (23a, 50) über wenigstens eine Formungsblende (12, 51) zu dem oder den diffraktiven Trägern gesendet werden.

33. Messvorrichtung nach einem der Ansprüche 25 bis 32, **dadurch gekennzeichnet, dass** die Mittel (25) zum Erfassen und Lesen der gebeugten optischen Codes (10, 64) von Photodetektoren des Typs Pixelzeilen, -netze oder -matrizen, CCD-Sensoren, Photodioden oder auch lichtelektrischen Zellen oder Sperrschichtphotozellen gebildet sind, die auf dem Weg der von dem oder den diffraktiven Trägern (1, 1c, 1d) gebeugten Strahlen (23b) angeordnet sind.

34. Messvorrichtung nach dem vorhergehenden Anspruch, **dadurch gekennzeichnet, dass** die Photodetektoren derart angeordnet sind, dass jede gebeugte optische Struktur, die an der Stelle erzielt wird, an der ein gebeugter Strahl (23b) auf ein Pixelnetz trifft, wenigstens 3 Pixel abdeckt.

35. Vorrichtung nach einem der Ansprüche 33 und 34, **dadurch gekennzeichnet, dass** die Anzahl der Pixel zwischen zwei nebeneinander liegenden Flecken (57a, 57b) auf wenigstens 3 Pixel festgelegt ist.

36. Vorrichtung nach einem der Ansprüche 25 bis 35, **dadurch gekennzeichnet, dass** der Lichtstrahl (50, 23a) gemäß einem normalen Strahleneinfall zum diffraktiven Träger (1, 1c, 1d) gelenkt wird.

37. Vorrichtung nach einem der Ansprüche 25 bis 35, **dadurch gekennzeichnet, dass** der Lichtstrahl (23a, 50) in Richtung des diffraktiven Trägers (1, 1c, 1d) um einen Winkel zwischen 0° und 17° bezüglich der Normalen des diffraktiven Trägers (1, 1c, 1d) geneigt ist.

38. Vorrichtung nach einem der Ansprüche 25 bis 37, **dadurch gekennzeichnet, dass** sie Synchronisationsmittel aufweist, die es ermöglichen, einen optischen Code (10, 64) zu erfassen und zu lesen, der von einer individualisierten diffraktiven Struktur erzeugt wird, wenn der von der Lichtquelle (22) ausgesendete Strahl (23a, 50) auf diese Struktur zentriert ist.

39. Messvorrichtung nach dem vorhergehenden Anspruch, **dadurch gekennzeichnet, dass** die Synchronisationsmittel spezifische Photodetektoren zur Erfassung von optischen Strukturen aufweisen, die man unabhängig von denen, die den Code (10, 64) der zu messenden Position bilden, erhält, beispielsweise Lichtflecken (57a, 57b), die auf wenigstens einer speziell für die Synchronisation bestimmten diffraktiven Spur (59) angeordnet sind.

40. Messvorrichtung nach einem der Ansprüche 25 bis 39, **dadurch gekennzeichnet, dass** sie die Messung der Drehbewegung ermöglicht, in die wenigstens ein mit einer Rotationswelle (20) fest verbundener diffraktiver Träger (1, 1c, 1d) versetzt wird.

41. Messvorrichtung nach dem vorhergehenden Anspruch, **dadurch gekennzeichnet, dass** sie zwei übereinander angeordnete diffraktive Drehscheiben (1c, 1d) umfasst, von denen eine (1c) die Messung der Winkelpositionen auf einer Umdrehung ermöglicht und die andere (1d), die sich N-mal langsamer dreht, die Messung der Anzahl der Umdrehungen, die innerhalb der Grenze von N Umdrehungen ausgeführt werden, ermöglicht.

42. Messvorrichtung nach einem der Ansprüche 25 bis 41, **dadurch gekennzeichnet, dass** ein einziges einen Lichtleiter bildendes Bauteil gleichzeitig als Blende, Kollimationslinse, Spiegel und Schutzaufnahme für die Laserdiode und die Photodetektoren dient.

43. Lenksäule (20) eines Fahrzeugs, die eine Positionsmessvorrichtung gemäß einem der Ansprüche 28 und 42 aufweist.
